# EUROPEAN PATENT SPECIFICATION

(11) **EP 2 698 286 B1**
(45) Date of publication and mention of the grant of the patent: **11.10.2017**
(21) Application number: 13182344.5
(22) Date of filing: 14.10.2004
(51) Int. Cl.: B60R 11/02, B60R 13/02

(54) **Mobile entertainment system**
Mobiles Unterhaltungssystem
Système de divertissement mobile

(30) Priority: 17.10.2003 US 688611; 31.10.2003 US 699334; 31.12.2003 US 749443; 25.03.2004 US 808659
(43) Date of publication of application: 19.02.2014
(62) Divisional of application: 04795518.2
(73) Proprietor: AUDIOVOX CORPORATION, Hauppauge, New York 11788 (US)
(72) Inventor: Schedivy, George C., New York, 11931 (US); Lavelle, Patrick M., New York, 11782 (US)
(74) Representative: Isarpatent

(56) References cited:
- EP-A1- 1 442 936
- WO-A2-2004/105373
- FR-A1- 2 829 980
- US-A- 5 267 775
- US-A1- 2002 163 215
- US-A1- 2003 137 584

## Description

### BACKGROUND OF THE INVENTION

### 1. Technical Field:

The present disclosure relates to a mobile entertainment system, and more particularly to a mobile entertainment system for providing audio and video programming.

### 2. Discussion of Related Art:

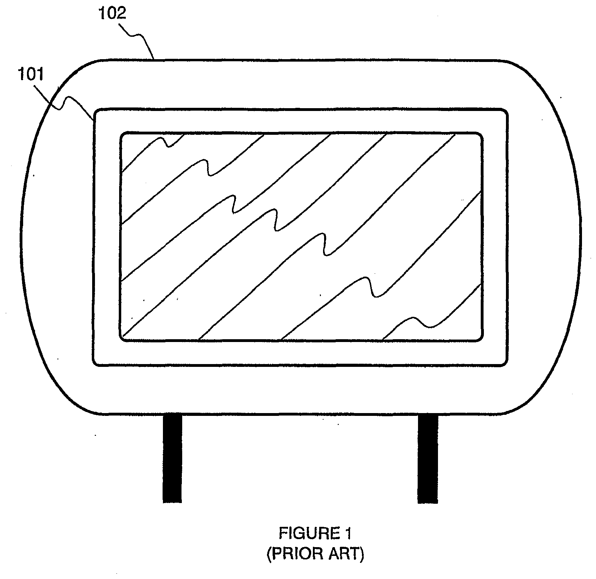

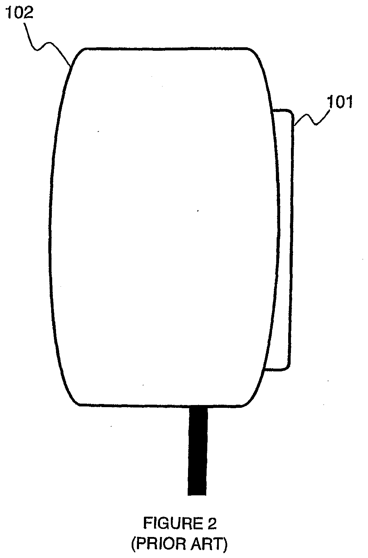

As society becomes more mobile and therefore spends a greater amount of time traveling and away from home, demand rises for electronic appliances and devices outside the home environment. For example, as shown in Figures 1 and 2, video screens 101 have been mounted in the headrests 102 of vehicles, facilitating video entertainment on the road. These video screens are connected to video players located, for example, in the glove box of the vehicle.

From Document WO 2004/105373 A2 which presents prior art under Art. 54 (3) EPC, a video system is known which comprises a base unit and a display which is mounted in a door pivotally connected to the base unit by a hinge.

### SUMMARY OF THE INVENTION

The present invention provides an entertainment system with the features of claim 1, and a docking station for supporting a removable video system with the features of claim 15. Preferred features of the invention are set out in the dependent claims.

According to an example, a video display system comprises a base portion, a third hinge (the second hinge will be defined below; for the first hinge, please refer to page 15) coupled to the base portion, an arm including a first end coupled to the first hinge, wherein the arm is movable about the third hinge, a second hinge coupled to a second end of the arm; and a display panel coupled to the second hinge, wherein the display is movable about the second hinge, the display panel comprising a display.

The display panel may be latchable to the base portion, preventing movement of the display and arm. The display may face towards or away from the base portion in a latched position. The video display system may further comprise a docking station for securing the base portion. The docking station may comprise a control for releasing the display from a latched position, a control for releasing the base portion from the docking station, a door hinged along a side of the docking station for selectively concealing the video display system. The docking station may secure the base portion to a vehicle headrest.
The video display system may further comprise a media player for receiving a media comprising data to be displayed by the display, and a bracket for securing the base portion to a surface, the bracket comprising a hinge coupled to a first point of the base portion and a latch for selectively securing a second point of the base portion. The third hinge may be positioned along an edge of the base portion and the second hinge positioned at a point between two opposing edges of the display panel.

According to an example, a video system comprises a base portion mounted in a vehicle seat headrest, and a door pivotally attached to the base portion, wherein the door includes a display and a media player mounted to the door.

The media player may be a slot-type device or a clamshell-type device. The base portion may be coupled to an internal headrest support structure or attached directly to the body of the headrest. The video system may further comprise a port for connecting to an external device, and a wireless transmitter for transmitting wireless signals on more than one channel, wherein the wireless signals include at least one of audio signals and video signals.

The display may be mounted on a front side of the door and the media player may be mounted on a backside of the door. The door may pivot in a range of angles including approximately 0° to 180° with respect to the base portion. The door may be pivotally attached to the base portion with a hinge.

The display and the media player may be capable of operating when the door is in a closed position, and a data storage medium may be inserted into the media player when the door is in an open position. The vehicle seat headrest may include at least one vent for dissipating heat. The media player may include at least one of a DVD player, a CD-ROM player, a video game player, a videocassette player, a television tuner, a radio tuner, and a device capable of playing at least one of computerized video files and computerized audio files.

According to an example, a video system comprises a base portion mounted in a vehicle seat headrest, wherein the base portion includes a media player mounted in the base portion, and a door pivotally attached to the base portion, wherein the door includes a display mounted to the door.

According to an embodiment of the present invention, an entertainment system comprises a media source, and a housing for supporting the media source, wherein the housing is coupled to an inner portion of a seat of a vehicle, and the media source is capable of being selectively connected to and disconnected from the housing.

The media source may include at least one of a DVD player, a CD-ROM player, a video game player, a videocassette player, a television tuner, a radio tuner, an MP3 player, and a digital video recorder. The housing may be mounted in one of a headrest and a main body of the seat and may include a cavity for receiving the media source. The media source may include a port for connecting to an external device, and a wireless transmitter for transmitting wireless signals, wherein the wireless signals include at least one of audio signals and video signals.

The entertainment system may further comprise a display operatively coupled to the media source, wherein the display is one of handheld, mounted to the housing and mounted at a location in the vehicle away from the housing. The display may be operatively coupled to the media source via at least one of a direct connection, a connection through the housing or a wireless connection. The media source may be electrically coupled to the housing using a pin array.

The entertainment system may further comprise a door pivotally attached to the housing with a hinge, wherein the hinge is positioned at a top, bottom or side portion of the door. A display may be mounted on the door. The seat of the vehicle includes may include an opening in line with a slot in the media source for receiving a data media to be inserted in the slot. The media source may include a storage device capable of storing at least one of a plurality of audio files and a plurality of video files.

According to an embodiment of the present invention, a docking station for supporting a removable video system comprises a connector for electrically coupling the docking station to the removable video system, and at least one port for connecting a media source to the docking station, wherein data from the media source is provided to the docking station via the at least one port and to the removable video system via the connector.

The at least one port may be one of a universal serial bus port, an audio input port, a video input port and an audio/video input port. The data may include at least one of audio data and video data. The media source may be one of an MPEG player, a card reader, a DVD player, a CD-ROM player, a video game player, a videocassette player, or a digital video recorder. The docking station may receive a media storage medium and data from the media storage medium may be provided to the removable video system via the connector.

The docking station may further comprise a television tuner, wherein a program received by the television tuner is provided to the removable video system via the connector. The docking station may be mounted in an interior portion of a vehicle, to one of a ceiling, a wall or a piece of furniture, or the docking station may be free standing.

The docking station may further comprise a stationary portion and a swinging portion attached to the stationary portion, wherein the removable video system is secured to the swinging portion. The docking station may be connectable to a battery and/or may include a port for connecting to an adapter for a power supply.

The removable video system may include a display capable of displaying video data received from the docking station. The removable video system may also include a media player capable of playing media stored on at least one of a digital video disc, a compact disc, a video compact disc, a flash card, a secure digital card, a smart media card and a memory stick card. The removable video system may be capable of operating when remote from the docking station, and/or capable of connecting to at least one of a battery and an adapter for a power supply.

### BRIEF DESCRIPTION OF THE DRAWINGS

Preferred embodiments of the present invention will be described below in more detail, with reference to the accompanying drawings:
Figure 1 is an illustration of a video screen installed in a vehicle headrest;
Figure 2 is an illustration of a video screen installed in a vehicle headrest;
Figure 3A is an illustration of a side view of a video system and docking station according to an example;
Figure 3B is an illustration of a side view of a video system and docking station according to an example;
Figure 3C is an illustration of a side view of an undocked video system according to an example;
Figure 3D is an illustration of a side view of a video system according to an example;
Figures 4A and 4B are illustrations of a docking station according to an example;
Figure 5A is an illustration of a front view of a clamshell-type video system according to an example;
Figure 5B is an illustration of a top view of a clamshell-type video system according to an example;
Figure 5C is an illustration of a side view of a clamshell-type video system according to an example;
Figure 5D is an illustration of a front view of a clamshell-type video system in an open position according to an example;
Figure 6A is an illustration of a docking station according to an embodiment of the present invention;
Figure 6B is an illustration of a rear view of a video system according to an example;
Figures 7A and 7B are illustrations of mechanisms for coupling a video system and a docking station according to an example;
Figure 8 is an illustration of a video system according to an example;
Figure 9 is an illustration of a docking station cover according to an example;
Figure 10 is a diagram of a system according to an example;
Figures 11A and 11B are illustrations of a video system according to an example;
Figures 12A-12C are illustrations of a video system and an overhead docking station according to an example;
Figures 13A-13B are illustrations of a video system and a tabletop docking station according to an embodiment of the present invention;
Figure 14 is an illustration of a video system according to an example;
Figure 15 shows illustrations of a video system and a battery pack according to an example;
Figure 16A is an illustration of a video system according to an embodiment of the invention;
Figure 16B is an illustration of a side view of a video system according to an embodiment of the invention;
Figure 16C is an illustration of a side view of a docking station and an undocked stationed video system according to an embodiment of the invention;
Figure 17A is an illustration of a front view of a video system and docking station according to an example;
Figure 17B is an illustration of a top view of a video system and docking station according to an example;
Figure 17C is an illustration of a video system and docking station according to an example;
Figure 17D is an illustration of a top view of a docking station according to an example;
Figure 17E is an illustration of a side view of a video system according to an example;
Figure 18A is an illustration of a side view of a video system and mounting bracket according to an example;
Figure 18B is an illustration of a front view of a video system and mounting bracket according to an example;
Figures 19A-19C show a display and a media player installed in a vehicle headrest according to an example;
Figures 20A-20E show a display and a media player installed in a vehicle headrest according to an example;
Figures 21A-21D show a display and a media player installed in a vehicle headrest according to an example;
Figure 22 shows a mechanism for installing the video system to a vehicle headrest according to an example;
Figure 23 shows a cover for the video system according to an example;
Figure 24 shows an entertainment system according to an example;
Figure 25 shows an entertainment system according to an example;
Figure 26 shows a housing attached to an internal support structure of a seat according to an example; and
Figures 27A-27D show an entertainment system according to an example.

### DETAILED DESCRIPTION OF PREFERRED EMBODIMENTS

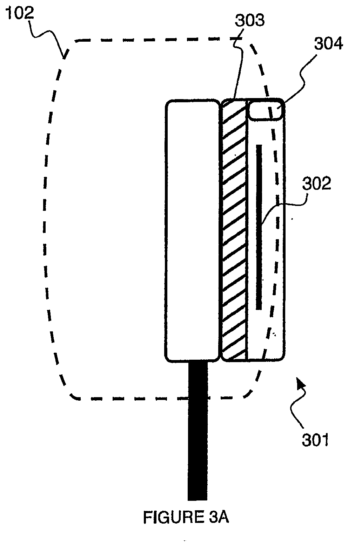

Referring to Figure 3A, the portable video system can be embodied as a slot-type video system 301 comprising a slot 302 that receives a data media into a mechanism for accessing data stored on the medium, such as a digital videodisk (DVD) player, MPEG player 3 (MP3) disk, or video game disk. The video system 301 is secured to a docking station 303. The video system 301 comprises a hinge 304. The hinge connects a video screen portion of the video system to a base portion of the video system.

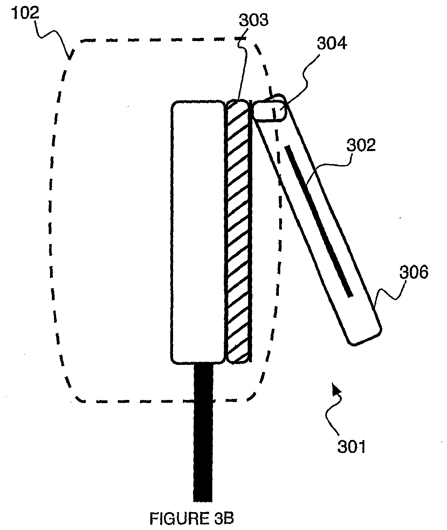

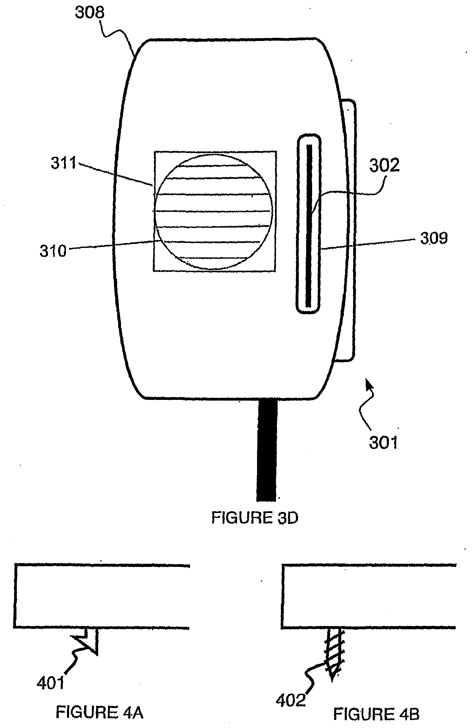

As shown in Figure 3B, the docking station 303 is secured in the headrest 102, and more particularly to an internal headrest support structure 305. The docking station 303 can be secured by, for example, a catch 401 as shown in Figure 4A and/or a screw 402 as shown in Figure 4B. One of ordinary skill in the art would recognize that other means of securing the docking station can be used, for example, an adhesive compound. The docking station 303 secures a base portion of the video system 301, and allows a video screen portion 306 to pivot away from the base portion. In a slot-type device, as shown in Figure 3B, the slot 302 is exposed for receiving a data media when the video screen portion 306 is in a pivoted position away from the base portion of the video system 301.

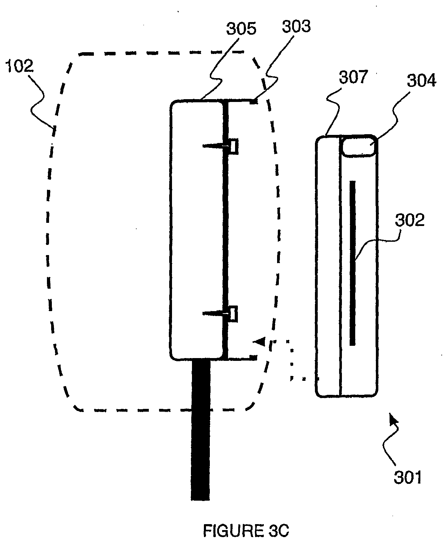

As shown in Figure 3C, the video system 301 can be disconnected from the docking station 303 (cut away view). The video system 301 can be operated autonomously. That is, when decoupled from the docking station 303, the video system 301 can access a data media to play, for example, a movie. When disconnected from the docking station, the video system can operate on power supplied by an optional battery or a connection to an external power supply, such as an AC or DC current. The connection can be to the base portion 307 of the video system 301.

Referring to Figure 3D, a headrest 308 can comprise an opening 309 for receiving a data media into the video system 301. The video system 301 can be a permanently installed or portable video system. The headrest opening 309 aligns with the slot 302 of the video system 301 to allow data media, such as a DVD or MP3 disk to be inserted from the side, top, or bottom of the headrest 308. The headrest 308 further comprises vents 310 for dissipating heat. A cooling fan 311 for increasing airflow can also be added within the headrest. The cooling fan 311 can be located in the headrest 308 and behind the vent 310, such that the cooling fan 311 is concealed.

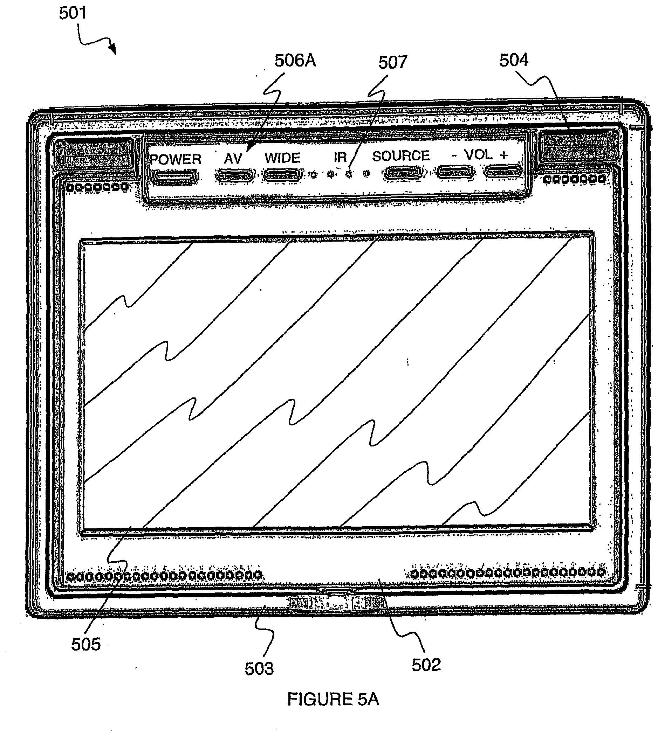

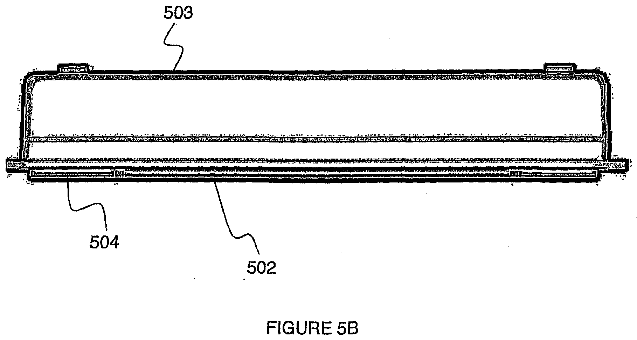

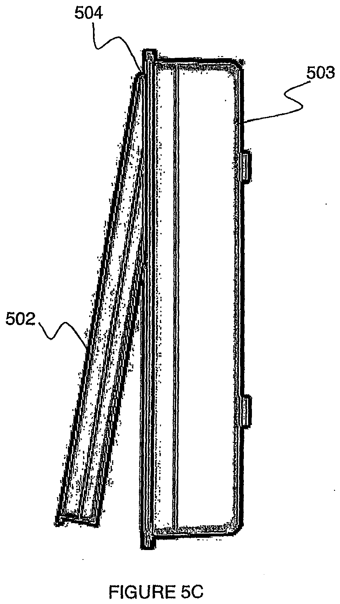

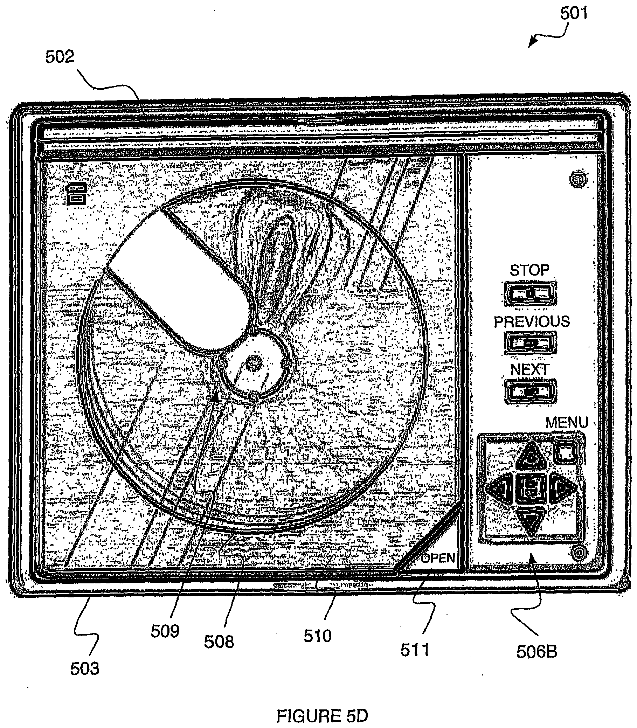

Referring to Figures 5A through 5D, a portable video system 501 of a clamshell-type is secured to a docking station. The portable video system 501 comprises a door 502 and a base portion 503 connected by a hinge 504. The door 502 pivots away from the base portion 503 on the hinge 504. The hinge 504 can be positioned on any side of the door 502. The door 502 comprises a video screen 505, controls 506A, and an infrared (IR) transmitter and/or receiver 507. The video system 501 receives a data media 508 comprising data to be accessed. When the door 502 is closed the data media 505 is secured. The door 502 can be opened by, for example, depressing a button releasing the door 503 from the base portion 503 or pulling the door 502 away from the base 503 wherein the hinge 504 is a friction fitting. A media player 509 is concealed by cover 510. The cover 510 can be opened by, for example, depressing a button 511. The video system 501 is removable, such that the video system can be disconnected from the docking station 303.

The base 503 comprises a control panel 506B. The control panel 506B comprises a plurality of controls for controlling the functions of the media player, for example, volume control, previous, next, pause, eject and play, and a power on/off button. The controls 506A and 506B can be, for example, buttons, switches, a touch sensitive liquid crystal display, and the like.

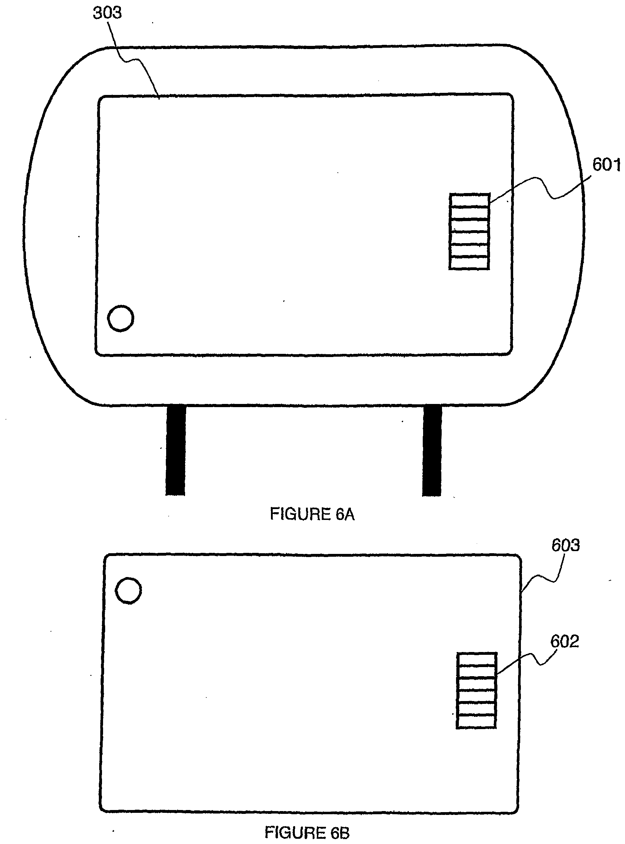

Referring now to Figures 6A and 6B, the docking station 303 comprises a pin array 601 for connecting to a pin array 602 of a video system 603. The video system 603 can be a slot-type device, a clamshell-type device, or any other device that is capable of being secured in the docking station 303. When the video system 603 is secured to the docking station 303, the pin array 601 and video system pin array 602 transfer data to and from the video player 603. Thus, the video player can be connected to external devices through the docking station 303. The external devices include, for example, a slave video display unit installed in another headrest, a security system, and a vehicle sound system. Where the video system 603 is permanently installed in the headrest, the docking station can be omitted, and a connection to the vehicle's power supply and/or data bus can be directly coupled to the video system 603 through, for example, an electrical harness.

The docking station 303 is coupled to a vehicle's electrical system. The docking station 303 is connected to a vehicle's power supply, e.g., 12 Volts, through a wiring harness. Power can be supplied to the video system 603 through the pin arrays 601 and 602. The docking station 303 can be connected to a vehicle's data communication bus. The data communications bus can carry data to and from the external devices.

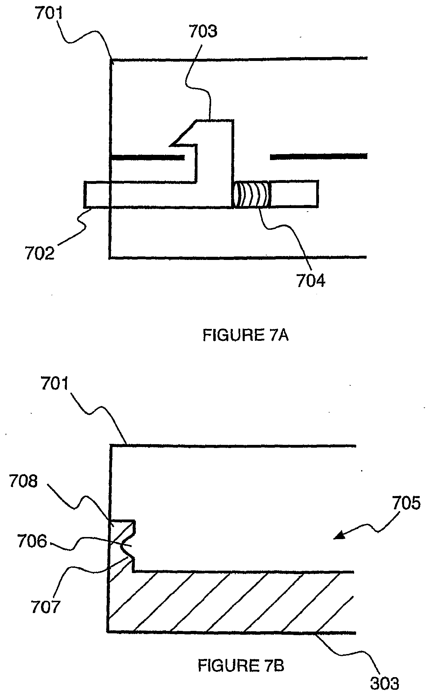

Referring to Figure 7A, the docking station 303 comprises a quick release mechanism for securing and releasing the video system 701. The quick release mechanism can include a button 702 for releasing a latch 703, which is secured to the video system 701 by pressing the video system 701 securely into the docking station 303. A latch mechanism comprises a latch 703 that passes into a bottom portion of the video system 701. The latch 703 is momentarily displaced as the video system 701 is coupled with the docking station 303. A spring 704 secures the latch 703 in the bottom portion of the video system 701. The button 702 can be pressed, aligning the latch 703 with an opening in the bottom portion of the video system 701, and the video system 701 can be pulled away from the docking station 303. As shown in Figure 7B, a rear portion 705 of the video system 701 can be secured by a convex portion 706 that fits within a concave portion 707 in the docking station 303. As the video system 701 is pressed into the docking station 303, a wall of the docking station 708 flexes away from the rear portion of the video player until the convex portion 706 is aligned with the concave portion 707. The convex portion 706 and the concave portion 707 cooperate to secure the video system 701 to the docking station 303. Thus, a wall of the docking station 708 can be formed of, for example, a flexible thermoplastic rubber. Other means of securing the video system 701 to the docking station 303 are contemplated, such as, snaps, locks, latches, and the like.

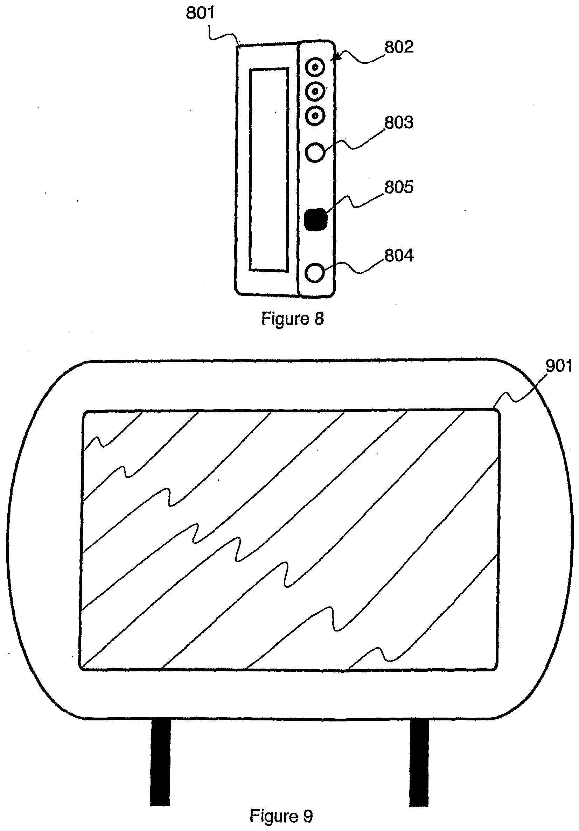

Referring to Figure 8, the video system 801 comprises input and output ports. For example, audio/video input/output ports 802, a headphone port 803, and a power port 804. It should be understood that other port types can be provided, for example, a USB port or RCA jack for connecting to a game controller. Further, the video system 801 comprises a wireless transmitter for transmitting, for example, an audio radio frequency, Bluetooth®, or Whitefire® signal to wireless headphones. The video system 801 further comprises an infrared (IR) port 805 for transmitting and/or receiving, for example, remote control signals. The ports can be positioned at any convenient location on the video system 801, for example, on a bottom portion of the base of the video system, a front portion of the base of the video system, or a side portion.

When the video system is removed from the docking station 303, a cover 901 can conceal a portion of the docking station, as shown in Figure 9. The cover 901 is manufactured from a material such as, plastic, wood, leather, and/or aluminum. The cover 901 can be secured by the same mechanisms as the video system, such as those shown in Figure 7A and 7B. Thus, the cover 901 and the video player can have one or more features in common, such as openings for receiving latches and the like.

It is to be appreciated that a portable video system according to the present invention is easily removable from and can be operated outside of a vehicle, for example, in home or office environments. Further, the video system can be permanently connected to the headrest support structure by, for example, screws, catches, and adhesives.

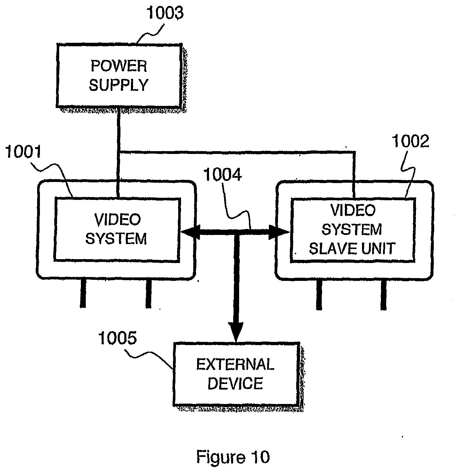

Referring now to Figure 10, a video system 1001 and a video slave unit 1002 are connected to a power supply 1003. The video slave unit receives data to be displayed from the video system 1001 through a data bus 1004. The data bus 1004 can be connected to other devices 1005, such as a vehicle's sound system or a vehicle's navigation system. The connections between the video system 1001 and the external device(s) 1005 can be a wireless connection (not shown). Similarly, the connection between the video system 1001 and the video system slave device 1002 can be a wireless connection (not shown).

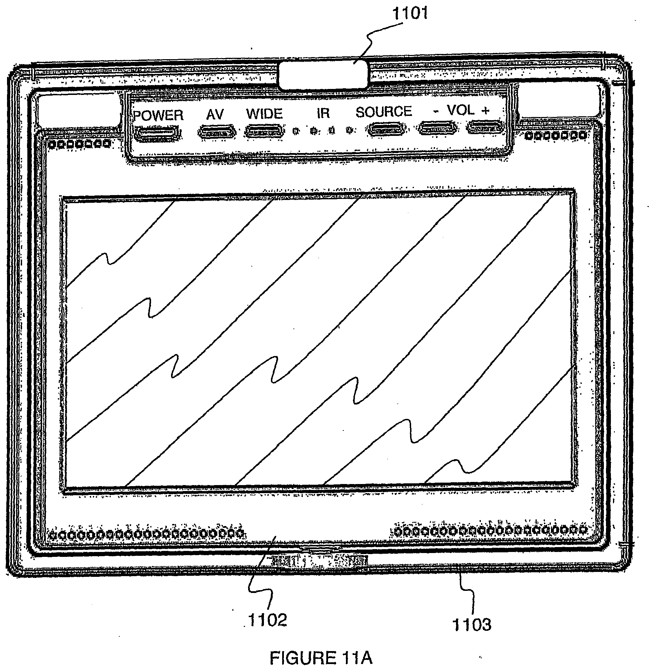

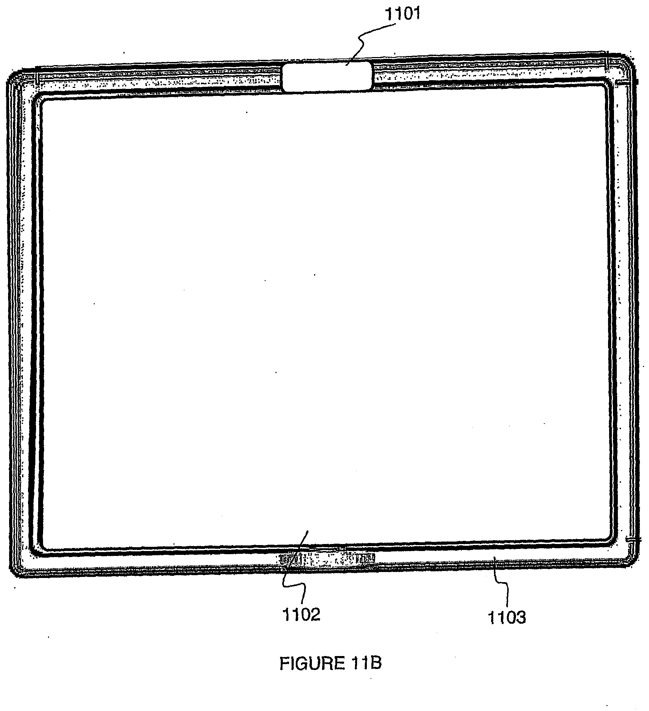

While the video system has been described in terms of a clamshell-type device and a slot-type device, the video system can be embodied in other configurations, for example, as a draw-type device comprising a draw and a spindle for securing the data media in place. Another example of a video system according to an example is a tablet-type device comprising a swivel-hinge connecting a video screen to a base portion as shown in Figures 11A and 11B. The swivel-hinge 1101 allows a door 1102 comprising a screen to move about two axes such that the screen 1102 can be swiveled about the swivel-hinge 1001 while in an open position, pivoted away from the base 1103. The screen can be turned to face the base portion 1103 when in a fully closed position (e.g., Figure 11B) or turned to face away from the base portion 1103 in a closed viewing position (e.g., 11A). In both the fully closed position and the closed viewing position, the door 1102 is substantially parallel to the base portion 1103. The swivel-hinge 1101 can be implemented in a slot-type device or a clamshell-type device.

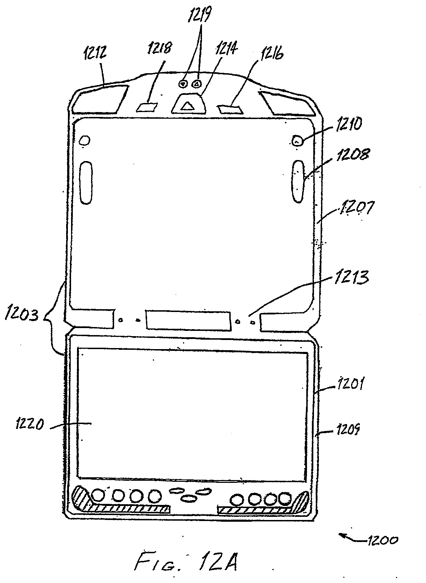

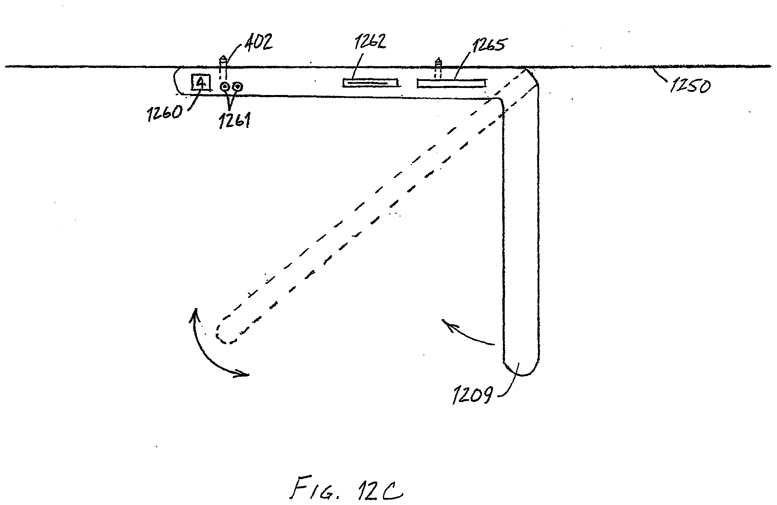

Referring to Figures 12A-12C, an entertainment system 1200 includes a docking station 1203 and video system 1201 mounted to the docking station 1203. The docking station 1203 is preferably mounted in a vehicle to the vehicle ceiling 1250 and includes stationary and swinging portions 1207 and 1209. The docking station 1203 also may be mounted in another portion of a vehicle, such as to a wall or to a seat in the vehicle. In addition, the docking station 1203 can be mounted outside of a vehicle, such as under a kitchen cabinet or to a wall or ceiling in a home or office. The docking station includes holes 1208 and 1210 in the stationary portion 1207 through which screws 402 pass into a surface to which the docking station 1203 is mounted. The docking station 1203 may be mounted to a surface using clips 401, screws 402, brackets, adhesive, nails, rivets or any suitable mounting mechanism known to one of ordinary skill in the art.

The docking station 1203 includes lights 1212 which can be turned on or off by user or wired to operate like standard overhead lighting when the docking station 1203 is mounted in a vehicle, such that the lights can be switched on or off and turn on automatically when a door of the vehicle is ajar. The function of the lights 1212 is controlled with a switch 1216.

The video system 1201 mounts to the swinging portion 1209 of the docking station 1203 using, for example, a quick release mechanism or concave/convex portions the same or similar to those described in connection with Figures 7A and 7B. Other means of securing the video system 1201 in the docking station 1203 are contemplated, such as, snaps, locks, latches, and the like. Referring to Figures 6A and 6B, an electrical connection between the video system 1201 and the docking station 1203 is provided through pin arrays 601 and 602. A pin array 602 of the video system 1201 is located on a rear portion of the video system housing. Data to and from the video system 1201, such as video and audio signals, is transferred through the pin arrays 601 and 602. Further, power from the vehicle can be transmitted to the video system 1201 through the pin arrays 601 and 602. An electrical connection between the video system 1201 and the docking station 1203 may be provided through connectors other than pin arrays known to those of skill in the art for transferring audio and video signals and power.

The swinging portion 1209 is coupled to the stationary portion 1209 with a hinge mechanism 1213 that allows the swinging portion 1209 to rotate about a horizontal axis between the stationary and swinging portions 1207 and 1209. The hinge mechanism 1213 allows the swinging portion 1209 to rotate approximately 180° and to lock in different positions at desired viewing angles of the screen 1220 of the video system 1201. Alternatively, a hinge mechanism allowing a more limited range of motion, for example, from about 0° to 90° may be used.

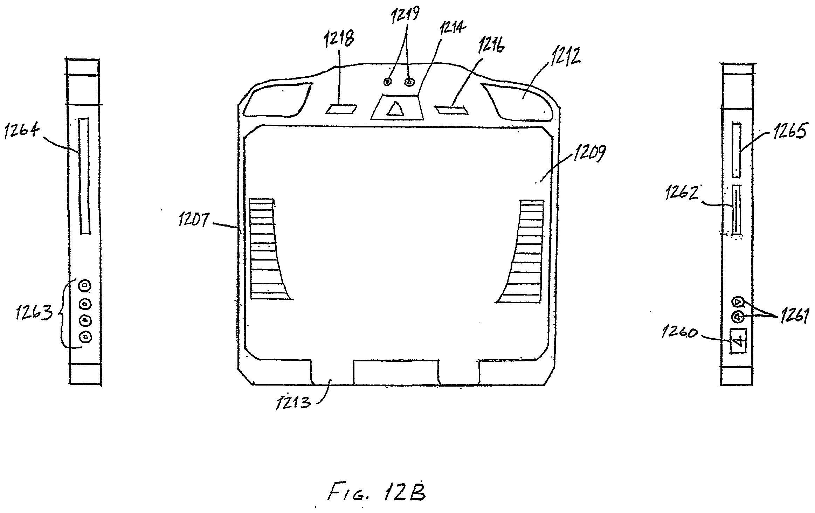

As shown in Figure 12B, the swinging portion 1209 closes against the stationary portion 1207 so as to conceal the video system 1201 and occupy less space when not in use. The swinging portion 1207 preferably locks in place with a latch mechanism that can be released by depressing a button 1214.

The video system 1201 has the capability of playing video programs received through the docking station 1203. For example, the docking station 1203 includes a TV tuner that receives television signals for broadcast by a video system mounted therein. A channel display 1260 and channel selector buttons 1261 for selecting a television channel are positioned on a side panel the docking station 1203, but may be positioned on other convenient portions of the docking station 1203. Additionally, the docking station may include a radio tuner (not shown).

The docking station 1203 also includes ports for connecting to external media devices, such as a universal serial bus (USB) port 1262 and input/output ports 1263. The ports 1262 and 1263 are used to connect devices, such as an MPEG player, a card reader, a DVD player, a CD-ROM player, a video game player, a videocassette player, and a digital video recorder. For example, audio input ports include XLR and RCA jacks and video input ports include S-video connections, RCA connections, F-connections, and component video. The input/output ports 1263 also can include, for example, a headphone port and a power port.

The docking station 1203 includes slots 1264 and 1265 of different sizes for receiving DVDs, CDs, flash cards, secure digital (SD) cards, smart media (SM) cards and memory stick (MS) cards. Accordingly, the docking station 1203 is capable of reading various types of media storage mediums and transferring audio and video data from the media storage medium to a video system 1201 connected thereto for broadcast on the video system 1201. As an alternative to using slots, media storage mediums can also be inserted into the docking station using a clamshell type design. In addition, a drawer type design may also be implemented whereby a holder for a media storage medium slides out of the docking station (like a drawer) to permit insertion of a media storage device in the holder.

The docking station 1203 also includes a control switch 1218 for turning a display 1220 of the video system 1201 on and off and selector buttons 1219 for selecting a program from a desired media source for display. For example, a user may depress the selector buttons 1219 to select a program from an MPEG player to be displayed on the video system 1201.

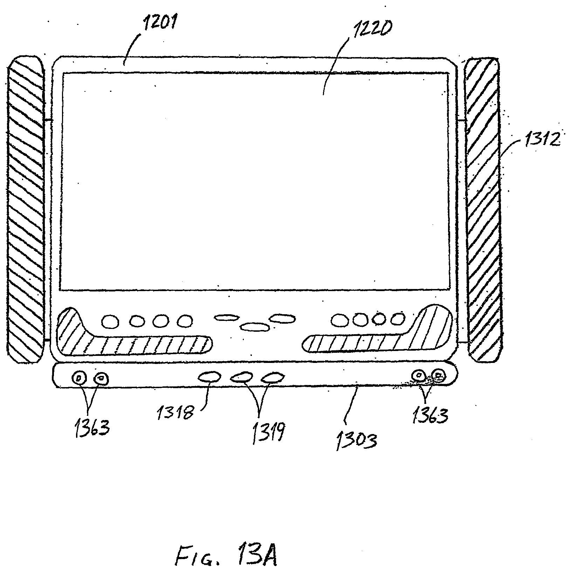

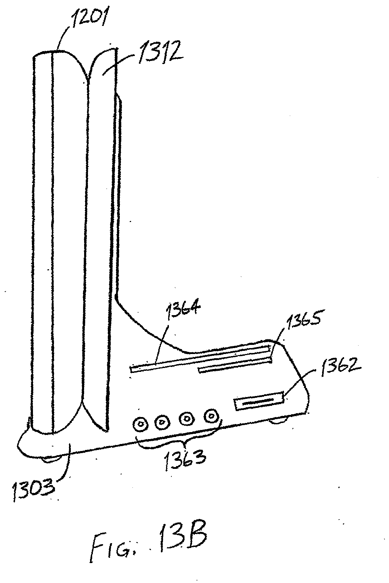

Referring to Figures 13A-13B, a video system 1201 is connected to a tabletop docking station 1303. The docking station 1303 is free standing and may be placed on a desk, table or counter, for example. Like the connection to the docking station 1203, a quick release mechanism or concave/convex portions the same or similar to those described in connection with Figures 7A and 7B or other means, such as snaps, locks, latches, and the like, can be used to secure the video system 1201 to the docking station 1303. Also, an electrical connection between the video system 1201 and the docking station 1303 for providing data and power between the docking station 1203 and the video system 1201 is provided through pin arrays 601 and 602 located on the docking station 1303 and the video system 1201, respectively. An electrical connection between the video system 1201 and the docking station 1303 may be provided through connectors other than pin arrays known to those of skill in the art for transferring audio and video signals and power.

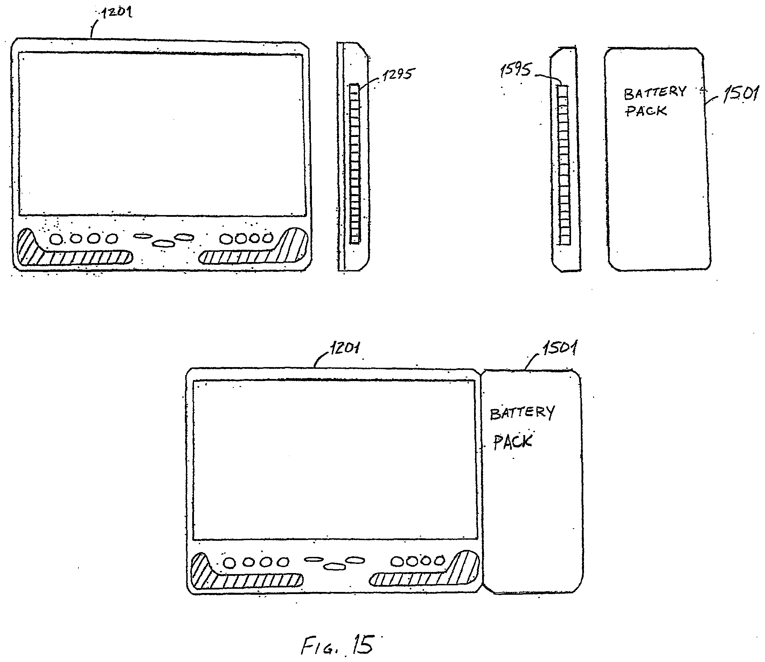

Like the docking station 1203, the docking station 1303 includes a USB port 1362 and various input/output ports 1363 for connecting to outside media devices, headphones and/or a power supply. For example, the docking station 1303 includes a power port for connecting to a power supply through an AC/DC adapter. The docking station 1303 also may connect to a battery pack (not shown) similar to the battery pack 1501 shown in Figure 15 for powering the docking station 1303 and a video system 1201 connected thereto.

The docking station 1303 includes slots 1364 and 1365 of different sizes for receiving media storage mediums such as DVDs, CDs, flash cards, secure digital (SD) cards, smart media (SM) cards and memory stick (MS) cards. Like the docking station 1203, clamshell and drawer type designs also may be used for insertion of media storage mediums in the docking station. The docking station 1303 is capable of reading various types of media storage mediums and transferring audio and video data from the media storage medium to a video system 1201 connected thereto for broadcast on the video system 1201. The ports 1362, 1363 and slots 1364, 1365 can be located on the front, side or rear of the docking station 1303.

The docking station 1303 also includes speakers 1312 for broadcasting audio programs or audio associated with a video program. Like the docking station 1203, the docking station 1303 may include TV and radio tuners, a control switch 1318 for turning a display 1220 of the video system 1201 on and off and selector buttons 1319 for selecting a program from a desired media source for display. For example, a user may depress the selector buttons 1319 to select a program from an MPEG player to be displayed on the video system 1201.

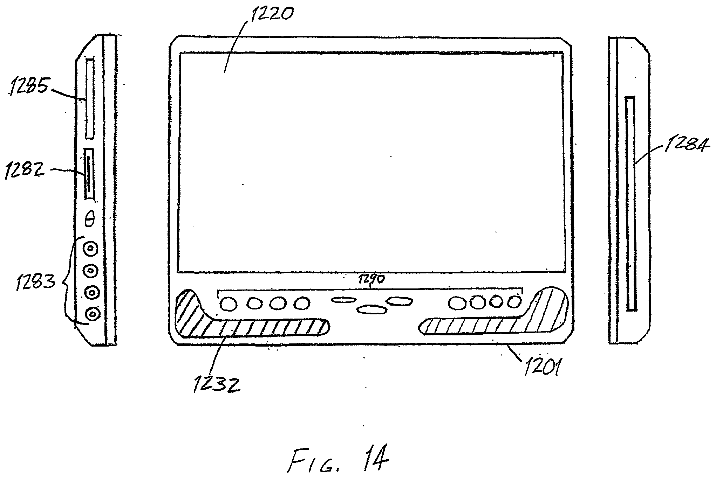

Referring to Figure 14, a video system 1201 capable of being connected to a docking station 1203/1303 is shown. The video system 1201 includes a display 1220, which is preferably a liquid crystal display (LCD). Alternatively, the display 1220 can be.a cathode ray tube (CRT), gas plasma or organic electro-luminescent display (OELD) device. The size of the display is approximately 7 inches to approximately 12 inches.

Like the docking stations 1203/1303, the video system includes ports for external media players, headphones or power and slots for receiving media storage mediums. For example, the video system 1201 includes a USB port 1282 and input/output ports 1283. A control switch 1287 is set to IN or OUT controlling whether the ports are input or output ports. For example, if the control switch is set to IN, a device, such as a portable DVD player, can be connected to the video system 1201 via audio and video IN ports to allow for display of a video program from the portable DVD player on the video system 1201.

The video system 1201 includes a power port for connecting to a power supply through an AC/DC adapter. Further, as shown in Figure 15, the video system 1201 also may connect to a battery pack 1501 for powering the video system 1201. The connection between the video system 1201 and the battery pack 1501 is provided through respective pin arrays 1295 and 1595 located on the video system 1201 and battery pack 1501. The position of the pin array 1295 on the video system 1201 may vary depending on the number and location of ports and slots incorporated into the video system 1201. Connectors other than pin arrays known to those skilled in the art may also be used.

The slots 1284 and 1285 are different sizes for receiving a variety of media storage mediums such as DVDs, CDs, video CDs (VCDs), flash cards, secure digital (SD) cards, smart media (SM) cards and memory stick (MS) cards. Like the docking stations 1203/1303, clamshell and drawer type designs also may be used for insertion of media storage mediums in the video system 1201. The video system 1201 is capable of reading the various types of media storage mediums inserted therein for broadcast on the video system 1201. The ports 1282,1283 and slots 1284, 1285 can be located on the front, side or rear of the video system 1201.

The video system 1201 is capable of operating independent of the docking stations 1203/1303, relying on power supplied through a connection to a standard power supply (e.g., an adapter connected to a household outlet) or through the battery pack 1501. Media players, such as a DVD player, are built into the video system 1201 or can connect to the video system 1201 via the ports 1282 and 1283.

When connected to a docking station 1203/1303, the video system 1201 is capable of receiving video and audio programs through the docking station 1203/1303 from media players connected to the docking station 1203/1303. Alternatively, the video system 1201 can broadcast video programs received from media players built into the video system 1201 or directly connected to the video system 1201 via ports 1282 and 1283. It should also be understood that a video display device, not having any media sources built into the video display device or connected thereto, can be connected to the docking station 1203/1303 and receive the video programs for broadcast through media players connected to the docking station 1203/1303.

The video system 1201 includes speakers 1232 for broadcasting audio programs or audio associated with a video program. Like the docking stations 1203/1303, the video system 1201 may include TV and radio tuners. The video system 1201 includes a variety of control buttons 1290 controlling power, source, screen mode, picture selection and functions of a media source, such as stop, pause, previous, play and next. The control buttons 1290 enable a user to control display characteristics and which programs from which sources are displayed. Additional control buttons can include volume control and channel selection.

According to an embodiment of the present invention, a portable video system can be coupled to a vehicle headrest. The portable video system receives a data media comprising data to be displayed. The video system is secured to a docking station. The docking station can be mounted, for example, in a headrest of an automobile's seat or under a kitchen cabinet. The video system is removable, such that the video system can be disconnected from the docking station.

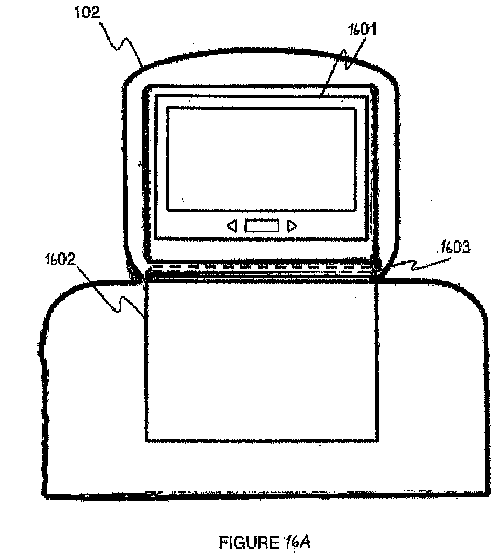

Referring to Figures 16A-16C, a video system 1601 is mounted in a headrest 102. A door 1602 can protect the video system 1601. The door 1602 swings away from the headrest 102 to reveal the video system 1601. The door 1602 is coupled to the docking station by a first hinge 1603 or other retaining means. When the video system 1601 is removed from the headrest 102, the door 1602 can be closed to conceal the docking station.

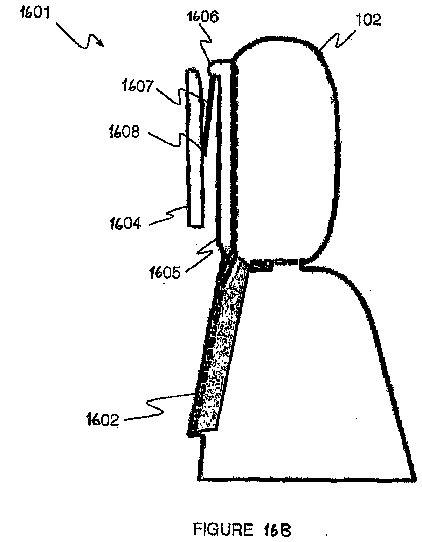

Referring to Figure 16B, the video system 1601 comprises a video display panel 1604. The video display panel 1604 is coupled to a video system base portion 1605 by a hinge. More than one hinge can be provided.

A third hinge 1606 is provided to movably couple the video system base portion 1605 to an arm 1607. The arm 1607 is in turn movably coupled to the video display panel 1604 by a second hinge 1608. The third hinge 1606 is positioned along an edge of the base portion 1605. The second hinge 1608 is connected to the display panel 1604 a point between two opposing edges of the display panel, such that the display panel 1604 can be positioned against the base portion 1605 facing towards the base portion or away from the base portion 1605. The third hinge 1606 and second hinge 1608 operate in a plane perpendicular to the video system base portion 1605 allowing the display panel 1604 to move in an arc around the third hinge 1606. Thus, the display panel 1604 is simultaneously moveable on an arc about a first point of the base portion and a plurality of second points defined along the arc, wherein the arc is on a plane perpendicular to the base portion

A hinge may provide movement in more than one axis. For example, the second hinge 1608 may allow movement in the plane perpendicular to the video system base portion 1605 and in a left/right pan movement. According to another example, a hinge may be a ball and socket type hinge allowing the display panel 1604 to be positioned in any of a plurality of planes.

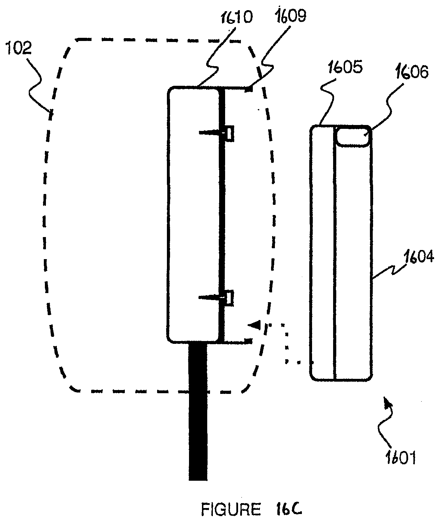

Referring to Figure 16C, the video system 1601 can be permanently mounted or coupled to a docking station 1609 of the headrest 102. The docking station 1609 is secured in the headrest 102, and more particularly to an internal headrest support structure 1610. The docking station 1609 can be secured by, for example, a catch 401 as shown in Figure 4A and/or a screw 402 as shown in Figure 4B. One of ordinary skill in the art would recognize that other means of securing the docking station can be used, for example, an adhesive compound. The docking station 1609 secures a base portion 1605 of the video system 1601, and allows a video screen portion 1604 to move away from the base portion 1605.

As shown in Figure 16C, the video system 1601 can be disconnected from the docking station 1609 (cut away view). The video system 1601 can be operated autonomously. That is, when decoupled from the docking station 1609, the video system 1601 can access a data media to play, for example, a movie. When disconnected from the docking station 1609, the video system 1601 can operate on power supplied by an optional battery or a connection to an external power supply, such as an AC or DC current. The connection can be to the base portion 1605 of the video system 1601.

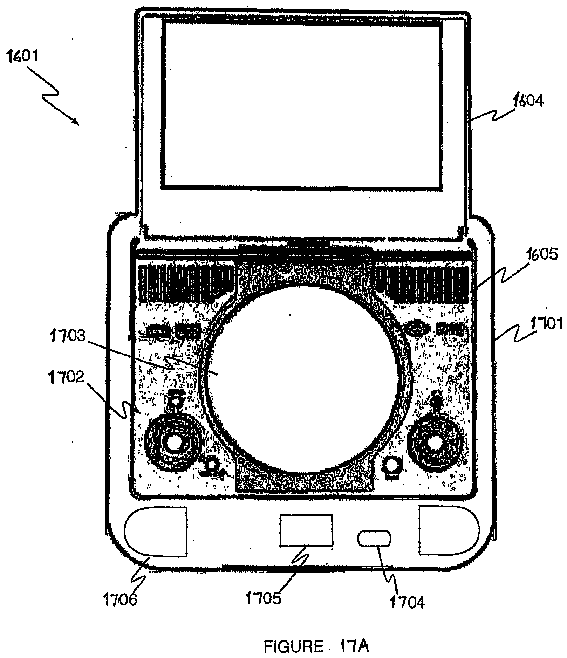

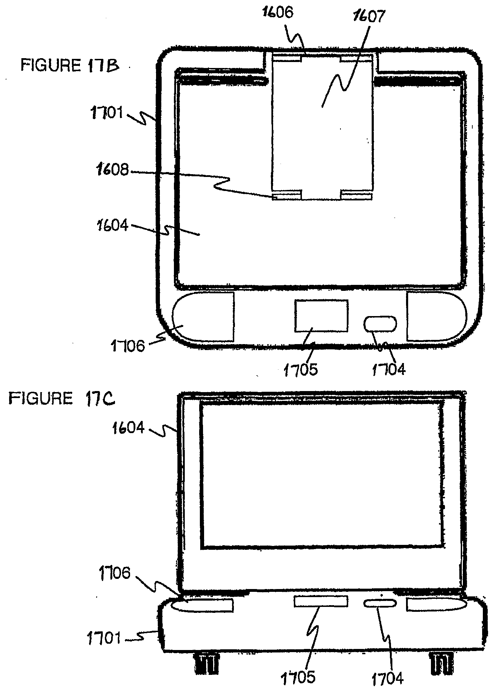

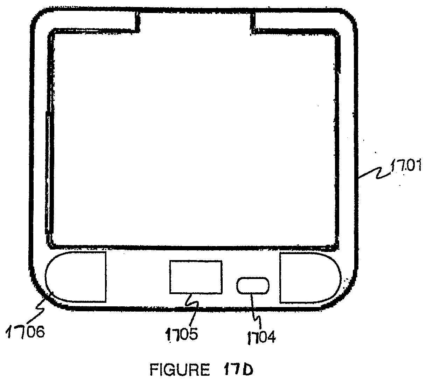

Referring to Figure 17A-17D, a video system 1601 and docking station 1701 are shown. The video system 1601 is removable, such that the video system can be disconnected from the docking station 1701. The video system 1601 comprises a base portion 1605 and a display panel 1604.

A base portion of the video system 1605 comprises a control panel 1702. The control panel 1702 comprises a plurality of controls for controlling the functions of the media player, for example, volume control, previous, next, pause, eject and play, and a power on/off button. The controls can be, for example, buttons, switches, a touch sensitive liquid crystal display, and the like. The base portion comprises a door 1703 concealing a media player, e.g., a DVD or CD-ROM player.

The docking station 1701 comprises a control 1704 for releasing the video system 1601 and a control 1705 for releasing the display panel 1604 independent of the base portion 1605, such that the display panel 1604 may be opened while the video system 1601 is docked. The control 1705 for releasing the display panel 1604 operates a latch or other retaining means that retains the display panel 1604 to the base portion 1605. The docking station 1701 may also comprise additional elements such as courtesy lights 1706, audio/visual ports, remote control signal receivers, etc.

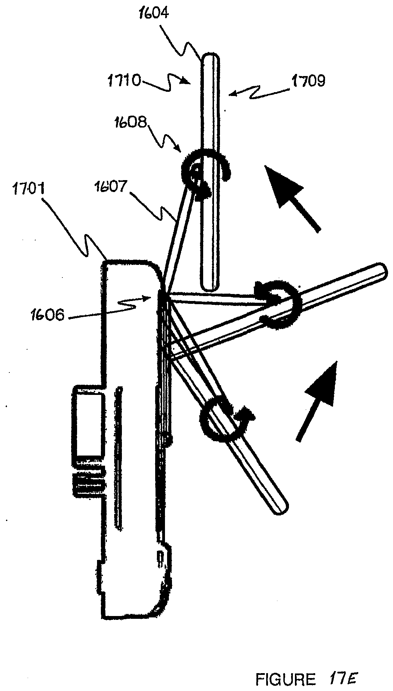

Referring to Figures 17B and 17E, the third hinge 1606 and second hinge 1608 are connected to the arm 1607. The arm 1607, in combination with the third hinge 1606 and second hinge 1608, couple the display panel 1604 to a base portion of the video system docked in the docking station 1701. The display panel 1604 comprises a display 1709 for rendering data. When the display panel 1604 is closed, e.g., latched to the base portion, the display 1709 may be visible or may be protected by a back portion 1710 of the display panel 1604. As shown in Figures 16A-16B and 17E, the display panel 1604 can be latched to the base portion with the display facing towards the base portion for storage or away from the base portion for viewing.

Referring back to Figures 6A-6B, a docking station 1701, like the docking station 303 shown in Figure 6A, is coupled to a vehicle's electrical system. The docking station 1701 is connected to a vehicle's power supply, e.g., 12 Volts, through a wiring harness. Like the video system 603 shown in Figure 6B, power can be supplied to the video system 1601 through the pin arrays 601 and 602. The docking station 1701 can be connected to a vehicle's data communication bus. The data communications bus can carry data to and from the external devices.

Referring back to Figures 7A and 7B, like the docking station 303, the docking station 1701 comprises a quick release mechanism as shown in Figure 7A, or a concave portion 707 for mating with a convex portion 706, as shown in Figure 7B, for securing and releasing the video system 1601.

It is to be appreciated that a portable video system according to the present invention is easily removable from and can be operated outside of a vehicle, for example, in home or office environments. Further, the video system can be permanently connected to the headrest support structure by, for example, screws, catches, and adhesives.

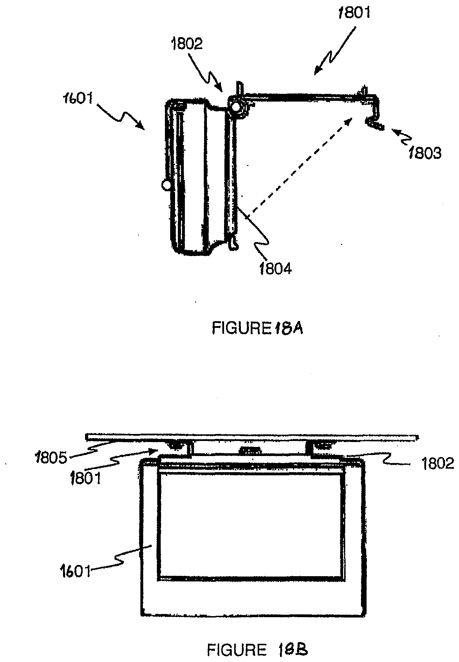

Referring to Figure 18A and 18B, a video system 1601 may be installed on a surface, such as under a shelf or on a desk. The video system 1601, including the display and base portion, can be coupled to a bracket 1801. The bracket 1801 comprises a base portion including a hinge 1802 and a latch 1803, and an arm portion 1804 coupled to the hinge 1802 and able to swing away from the surface 1805 when disconnected from the latch 1803. Coupled to the arm portion 1804, the video system 1601 can swing away from the surface 1805. The video system 1601 may be coupled to the bracket by a docking station 1701, facilitating the removal of the video system 1601. Where a docking station 1701 is implemented, the docking station is coupled to the portion of the bracket that is movable away from the surface 1805.

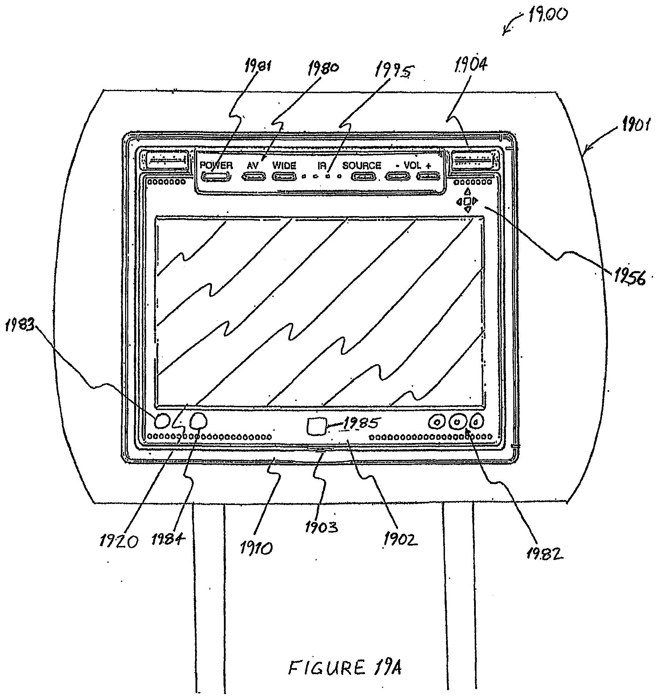

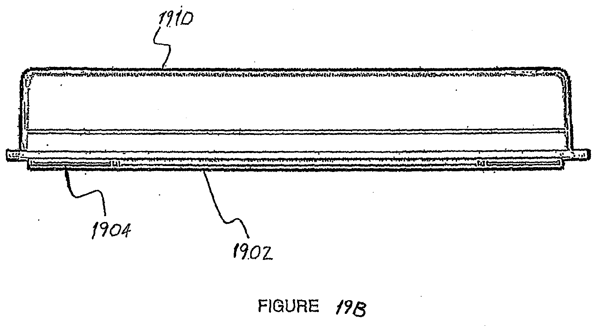

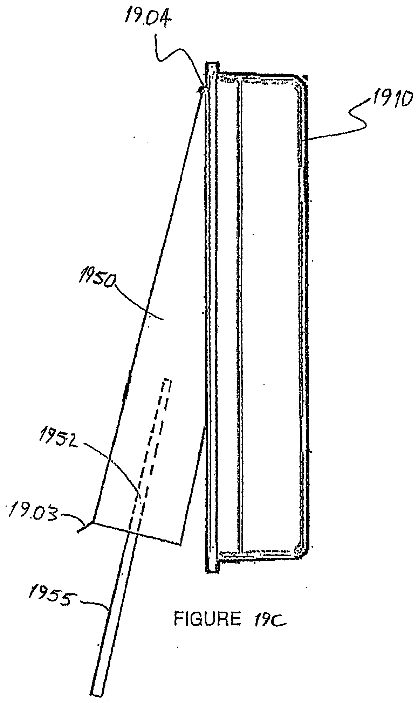

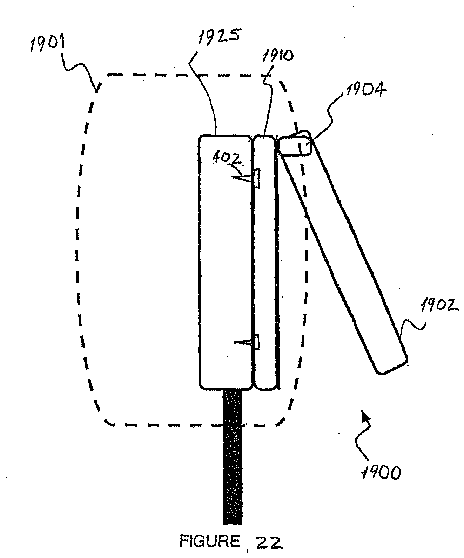

Referring to Figures 19A-19C, the video system 1900 mounted in a headrest 1901 includes a door 1902 is connected via a hinge or hinges 1904 to a base portion 1910. The door 1902 includes an entertainment unit 1950 and a display 1920 formed on opposite sides thereof. The entertainment unit 1950 and other entertainment units described herein may include, for example, a DVD player, a CD-ROM player, a video game player, a videocassette player (VCP), a television or radio tuner, an MP3 player or similar device capable of downloading and playing computerized video and/or audio files, or any combination of the above media sources. A connection between the display 1920 and the entertainment unit 1950 may be achieved through appropriately positioned openings in the door 1902. Alternatively, the door 1902 may consist of an open center section surrounded by a frame, wherein the display 1920, including the entertainment unit 1950 coupled to its rear, snugly fits into the open center section bordered by the frame. The display 1920 and the entertainment unit 1950 can be fixed to the door 1902 by, for example, screws, catches, adhesives, molding, pressure fitting and/or any other means known to those skilled in the art. Similarly, as shown in Figs. 4A-4B and 22, the base portion 1910 can be fixed to the headrest 1901 by, for example, screws 402, catches 401, adhesives, epoxies and/or any other means known to those skilled in the art. As shown in Figure 22, the base portion is secured in the headrest 1901, and more particularly to an internal headrest support structure 1925. As an alternative to mounting to an internal headrest support structure, the base portion may be attached (e.g., glued or riveted) directly to the body of the headrest.

The hinge 1904, located at a top portion of the door 1902, allows the door 1902 to pivot away from the base portion 1910 to expose a slot 1952 in the slot-type entertainment device 1950 for receiving a data media 1955, such as a DVD. The hinge 1904 may be positioned at top, side or bottom portions of the door 1902, and depending on the location of the hinge 1904, the slot 1952 may be positioned at top, side or bottom portions of the entertainment device 1950. The door 1902 may be opened, for example, by pulling a tab 1903 and/or by depressing a button (not shown) releasing the door 1902 from the base portion 1910. The door 1902 may be closed by re-engaging the released side of the door 1902 with the base portion 1910. A desired program can be played for viewing while the door 1902 is in the closed position.

The display 1920 has a thin display screen, preferably an LCD type screen, for displaying video information. A control panel 1980 on the display 1920 includes control buttons 1981 for controlling the on screen display characteristics.

The display 1920 may include input and output ports. For example, audio/video input/output ports 1982, a headphone port 1983, a power port 1984 and an IR port 1985 for transmitting and/or receiving, for example, remote control signals. It should be understood that other port types can be provided, for example, a USB port or RCA jack for connecting to a game controller or headphones. The ports can be positioned at any convenient location on the video system 1900, for example, on a bottom portion, a top portion, or a side portion of the video system 1900.

A speaker (not shown) for presenting audio information in connection with a video program being played can be mounted in the headrest 1901, or to the door 1902, base portion 1910, the display 1920, or the entertainment unit 1950. Alternatively, audio may be provided to vehicle occupants through the existing vehicle audio system.

To provide for audio reception through wireless headphones, the display 1920 may include a wireless transmitter 1995 for transmitting wireless signals to wireless receivers in wireless headphones. The wireless signals may include radio frequency signals for use with, for example, Bluetooth® wireless systems or infrared (IR) signals for use with, for example, Whitefire® systems. It is preferred that the wireless transmitter 1995 has the capability to transmit wireless signals over more than one channel operating at a different frequency for each channel. The use of more than one channel, for example, avoids interference between more than one wireless headphone user watching different programs on different displays. Wireless signals also may be encoded to prevent interference between wireless headphones. Such encoding may be based on, for example, spread spectrum technology. The wireless transmitter 1995 can include an optical transmitting device (e.g., an LED, a laser, and so forth) and an antenna for wireless transmission of IR signals and RF signals, respectively.

The video system 1900 can be connected to a vehicle's power supply, e.g., 12 Volts, through a wiring harness. The video system 1900 can also be connected to a vehicle's data communication bus, which carries data to and from the external devices. Thus, the video system 1900 can be connected to external devices including, for example, a slave video display unit installed in another headrest, a security system, and a vehicle sound system.

Controls 1956 for controlling functions of the entertainment device 1950, such as, volume, previous, next, pause, eject, play and power on/off may be positioned on the door 1902, display 1920, and/or the entertainment device 1950. The controls 1956 can be, for example, buttons, switches, a touch sensitive liquid crystal display and the like.

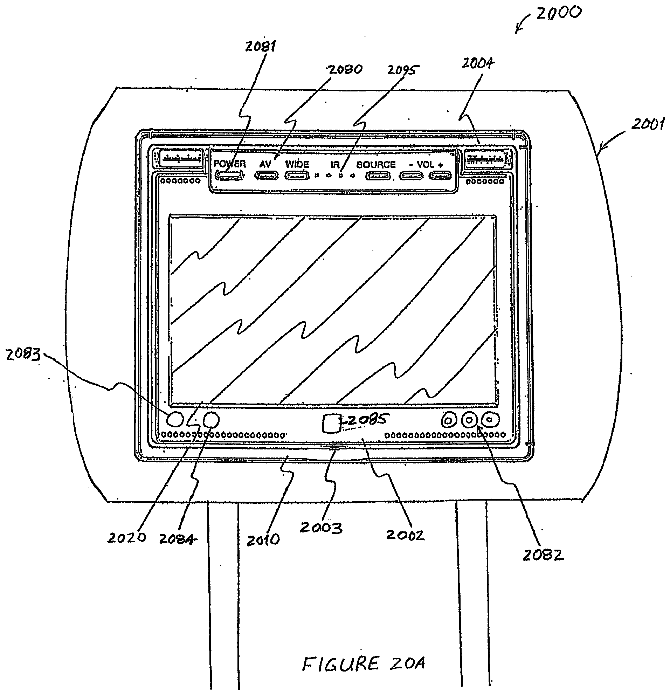

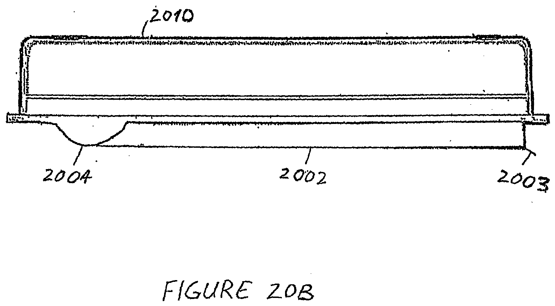

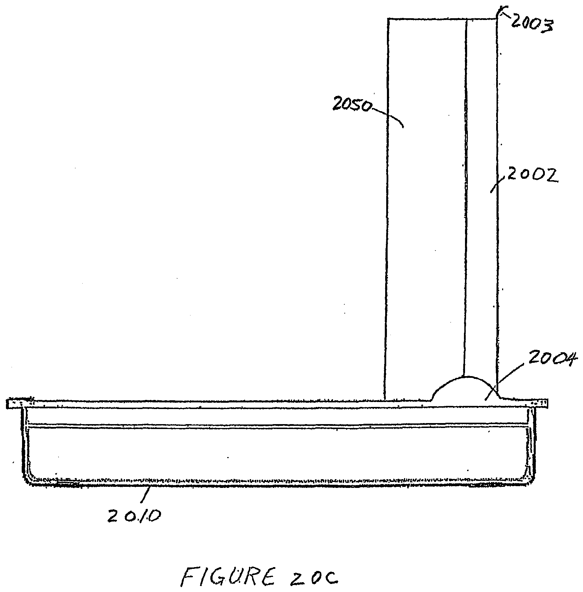

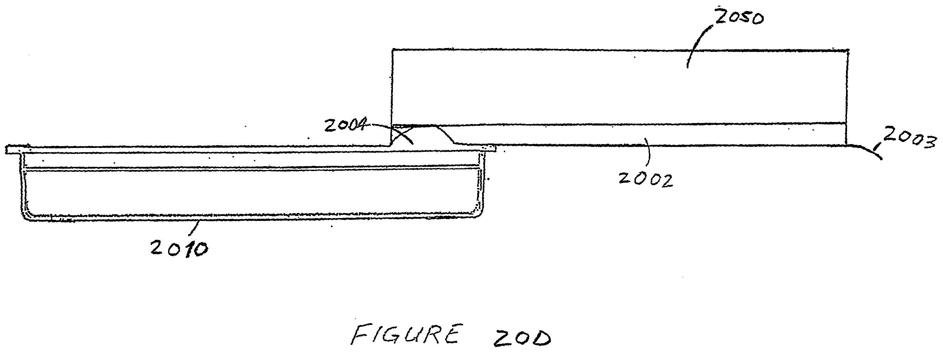

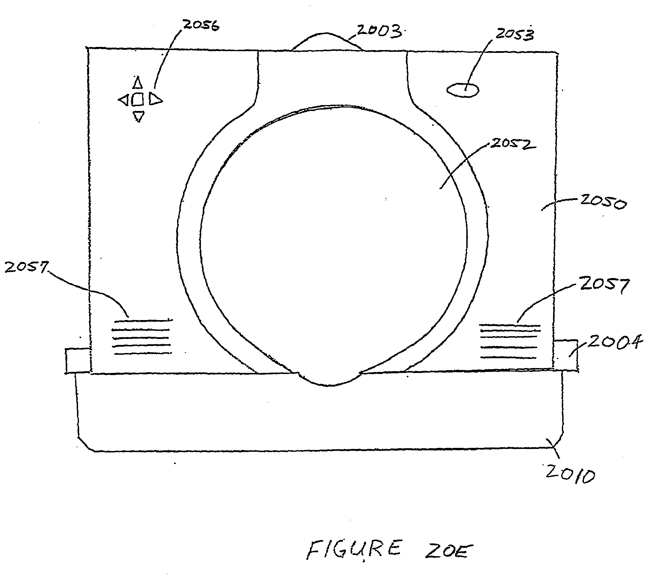

Figures 20A-20E show another example of a video system 2000 installed in a headrest 2001, wherein an entertainment unit 2050 is integrated into the headrest 2001 along with the display 2020.

As shown in Figures 20A-20E, a door 2002 is connected via a hinge or hinges 2004 to the base portion 2010. The door 2002 includes the display 2020 and the entertainment unit 2050 formed on opposites sides thereof, like the door 1902 and the entertainment unit 1950 of the previously described example. The display 2020 and the entertainment unit 2050 can be fixed to the door 2002 and the base portion 2010 can be fixed to the headrest 2001 by the same or similar means to those previously described in connection with the headrest 1901.

The hinge 2004, located at a top portion of the door 2002, allows the door 2002 to pivot 180° away from the base portion 2010 to expose a cover 2052 of a clamshell-type entertainment device 2050 that can be opened to allow insertion of a data media, such as a DVD, into the entertainment device 2050. A hinge 2004 that allows the door 2002 to pivot more or less than 180° can be used provided that easy opening of the cover 2052 and subsequent insertion or removal of a data media from the entertainment unit 2050 can be achieved. The hinge 2004 may be positioned at top, side or bottom portions of the door 2002. The door 2002 may be opened, for example, by pulling a tab 2003. As an alternative to the tab 2003, a button (not shown) may be depressed releasing the door 2002 from the base portion 2010. The cover 2052 may be opened, for example, by pulling a tab (not shown) and/or by depressing a button 2053 releasing the cover 2052 from the entertainment unit 2050. The door 2002 may be closed by re-engaging the released side of the door 2002 with the base portion 2010. A desired program can be played for viewing while the door 2002 is in the closed position.

Like the display 1920 of the previously described example, the display 2020 has a thin display screen, preferably an LCD type screen, and may include a control panel 2080 with control buttons 2081 for controlling the on screen display characteristics.

Like the wireless transmitter 1995 and the input/output ports 1982-1985 described above, a wireless transmitter 2095 and input/output ports 2082-2085 may be positioned at any convenient location on the door 2002, the display 2020 or the base portion 2010. Also, audio may be provided to vehicle occupants through the existing vehicle audio system or through a speaker mounted in the headrest 2001 or entertainment unit 2050, or to the door 2002, base portion 2010 or display 2020. For example, speakers 2057 are shown mounted in the entertainment unit 2050. Like the video system 1900 described above, the video system 2000 also may be connected to a vehicle's power supply and to external devices.

Further, like the controls 1956, controls 2056 for controlling functions of the entertainment device 2050, may be positioned on the door 2002, display 2020, and/or the entertainment device 2050.

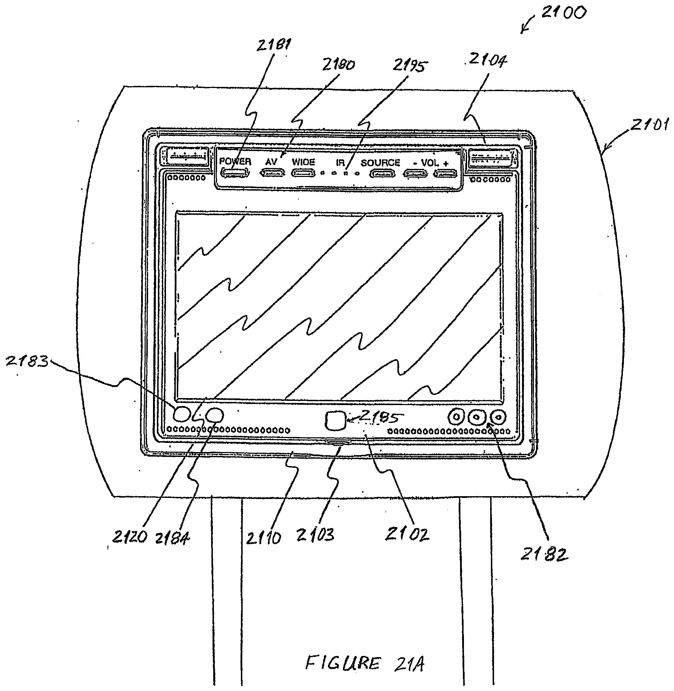

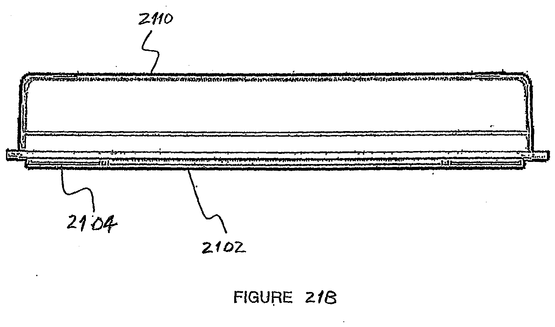

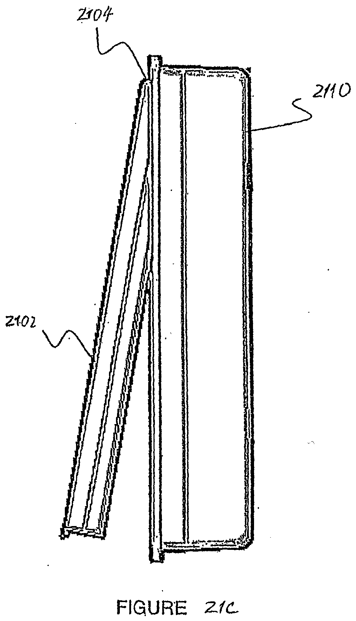

Figures 21A-21D show another example of a video system 2100 installed in a headrest 2101, wherein an entertainment unit 2150 is integrated into the headrest 2101 along with the display 2120.

As shown in Figures 21A-21D, a door 2102 is connected via a hinge or hinges 2104 to the base portion 2110. The door 2102 includes the display 2120 formed on a front side thereof. The display 2120 can be fixed to the door 2102 by, for example, screws, catches, adhesives, molding, pressure fitting, snugly fitting into an open center section of the door 2102 bordered by a frame and/or any other means known to those skilled in the art. The base portion 2110 can be fixed to the headrest 2101 by the same or similar means to those previously described in connection with other examples.

The hinge 2104, located at a top portion of the door 2102, allows the door 2102 to pivot away from the base portion 2110 to expose a clamshell-type entertainment device 2150 positioned in the base portion 2110. The entertainment device 2150 can be fixed to the base portion 2110 by any acceptable means known to those skilled in the art, such as by screws, catches, adhesives, molding and pressure fitting. The entertainment unit 2150 may also be selectively housed in the base portion 2110 so that it is replaceable with a different entertainment unit operating with the same or a different type of media.

The entertainment device 2150 includes a cover 2152 that can be opened to allow insertion of a data media, such as a DVD, into the entertainment device 2150. The hinge 2104 may be positioned at top, side or bottom portions of the door 2102. The door 2102 may be opened, for example, by pulling a tab 2103. Alternatively, a button (not shown) may be depressed releasing the door 2102 from the base portion 2110. The cover 2152 may be opened, for example, by pulling a tab (not shown) and/or by depressing a button 2153 releasing the cover 2152 from the entertainment unit 2150. The door 2102 may be closed by re-engaging the released side of the door 2102 with the base portion 2110. A desired program can be played for viewing while the door 2102 is in the closed position.

Like the displays 1920 and 2020 of the previously described examples, the display 2120 has a thin display screen, preferably an LCD type screen, and may include a control panel 2180 with control buttons 2181 for controlling the on screen display characteristics.

Like the wireless transmitter 1995 and the input/output ports 1982-1985 described above, a wireless transmitter 2195 and input/output ports 2182-2185 may be positioned at any convenient location on the door 2102, the display 2120 or the base portion 2110. Also, audio may be provided to vehicle occupants through the existing vehicle audio system or through a speaker mounted in the headrest 2101 or entertainment unit 2150, or to the door 2102, base portion 2110 or display 2120. Like the video system 1900 described above, the video system 2100 also may be connected to a vehicle's power supply and to external devices.

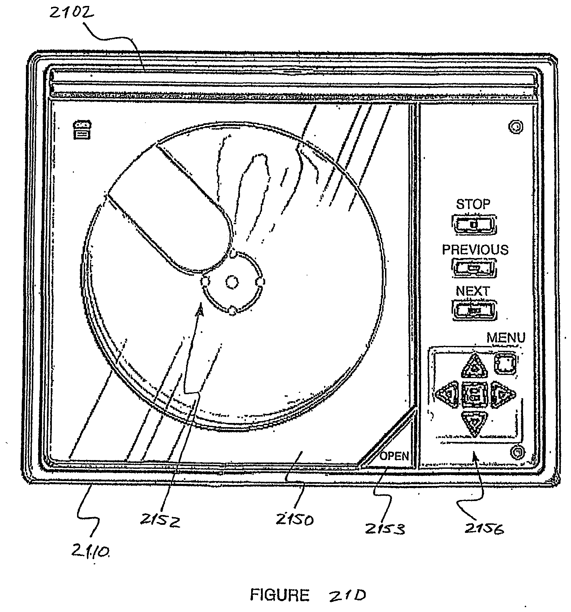

Further, like the controls 1956, controls 2156 for controlling functions of the entertainment device 2150, may be positioned on the door 2102, display 2120, and/or the entertainment device 2150. For example, controls 2156 are shown in Figure 21 D positioned on the entertainment device 2150.

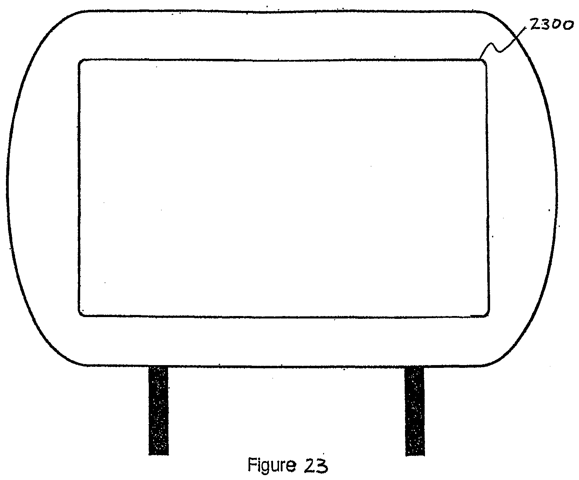

When the video system is not in use, a cover 2300 can conceal the video system, as shown in Figure 23. The cover 2300 is manufactured from a material such as, plastic, wood, leather, vinyl, cloth, and/or aluminum. Depending on the cover material, the cover 2300 can be secured by latches, catches, snaps, Velcro, and/or a zipper. The cover 2300 may include openings for receiving latches and the like.

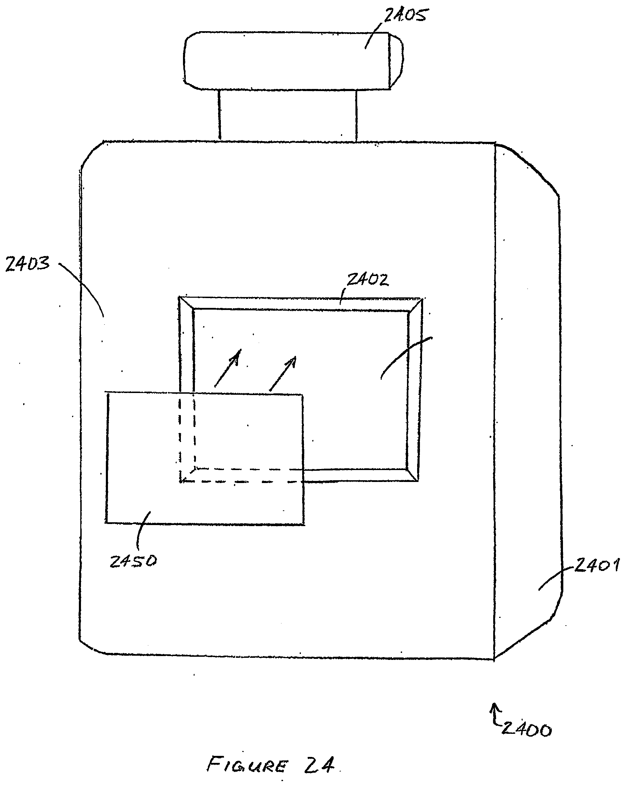

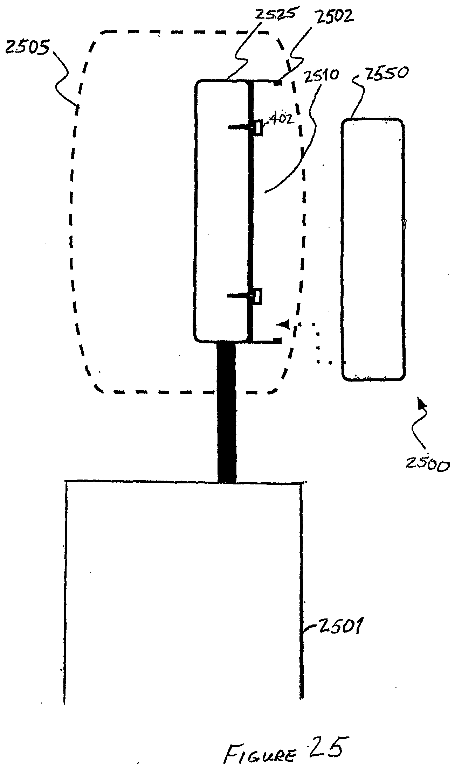

Referring to Figure 24, an entertainment system 2400 is shown, wherein a housing 2402 for a media source 2450 is integrated into a vehicle seat 2401 at, for example, the main body 2403 of the seat 2401. As shown in Figure 25, an entertainment system 2500 includes a housing 2502 for a media source 2550 that is integrated into the headrest 2505 of a vehicle seat 2501.

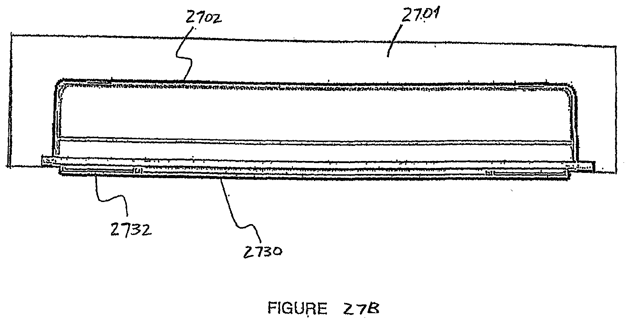

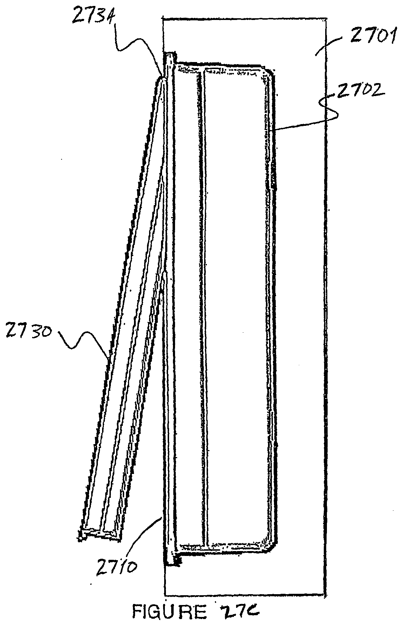

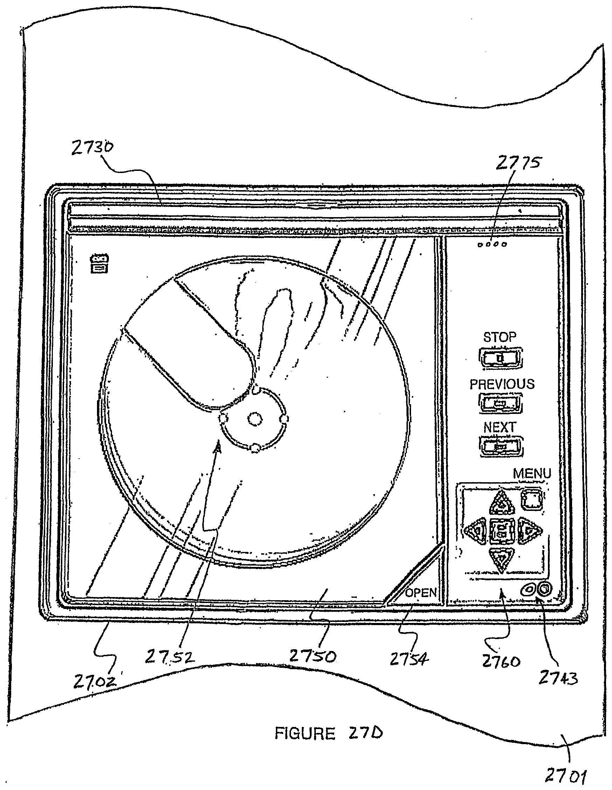

The media sources 2450, 2550 may include, for example, a DVD player, a CD-ROM player, a video game player, a videocassette player (VCP), a television or radio tuner, and an MP3 player, digital video recorder (DVR) or similar device capable of downloading, recording, storing (e.g., on a storage device, such as a hard disk) and/or playing video and/or audio files or programs. The media sources 2450, 2550 may also include any combination of the above media sources. If a media source requires insertion of a data media, such a DVD, the media source can be a clamshell-type device, wherein a data media is inserted into the media source through a cover, for example, positioned on the top of the device (Figure 27D), a slot-type device, wherein a data media is inserted through a slot in the media source, a drawer-type device including a drawer and a spindle for securing a data media in place, or any other device configured to receive a data media.

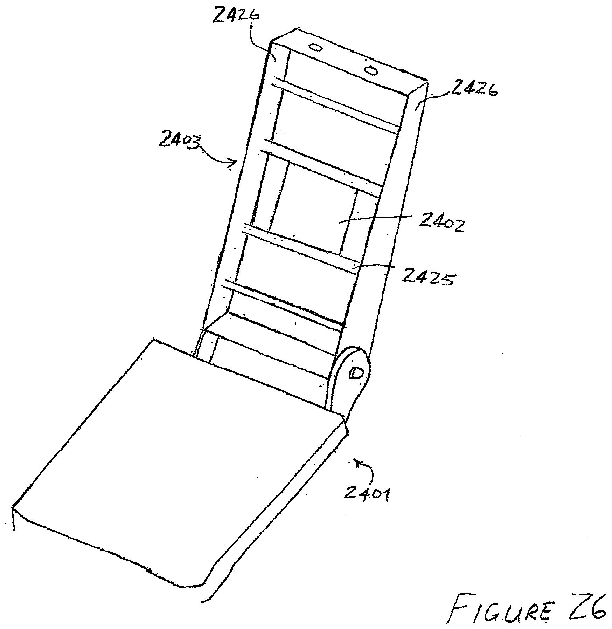

As shown in Figures 4A-4B and 25, the housings 2402, 2502 can be fixed to the vehicle seats 2401, 2501 by, for example, screws 402, catches 401, adhesives, epoxies and/or any other means known to those skilled in the art. As shown in Figure 25, the housing 2502 can be secured to an internal support structure 2525 of the headrest 2505. Alternatively, as shown in Figure 26, the housing 2402 may be secured to internal structures 2425, 2426 of the main body 2403 of the vehicle seat 2401. As an alternative to mounting to an internal support structure, the housings 2402, 2502 may be attached (e.g., glued or riveted) to a portion of the upholstery within the seat body or headrest.

The media sources 2450, 2550 can be permanently fixed in a cavity or open portion 2410,2510 of the housings 2402, 2502 by any acceptable means known to those skilled in the art, such as by screws, catches, adhesives, molding and pressure fitting. The media sources 2450, 2550 are preferably capable of being selectively inserted and mounted in the cavities 2410, 2510 and removable therefrom. The media sources 2450, 2550 may be selectively housed in the cavities 2410, 2510 so that they are replaceable with different media sources operating with the same or different types of media.

Referring back to Figures 7A-7B, like the docking station 303, the housings 2402, 2502 may include a quick release mechanism as shown in Figure 7A, or a concave portion 707 for receiving a convex portion 706, as shown in Figure 7B, for securing and releasing the media sources 2450, 2550.

Referring back to Figures 6A and 6B, like the docking station 303, a wall of the housing 2402, 2502 located in the cavity 2410, 2510 includes a pin array 601 for connecting to a pin array 602 located on the media source 2450, 2550. When the media source 2450, 2550 is secured to housing 2402, 2502, the pin array 601 and media source pin array 602 transfer data to and from the media source 2450, 2550. Thus, the media source can be connected to external devices through the housing 2402, 2502. The external devices include, for example, a slave video display unit installed in another part of the vehicle, a security system, and a vehicle sound system.

The media source 2450, 2550 may also be connected to the vehicle's power supply through the housing 2402, 2502. The housing 2402, 2502 can be coupled to a vehicle's electrical system and connected to a vehicle's power supply, e.g., 12 Volts, through, for example, a wiring harness. Power can be supplied to the media source 2450, 2550 through the pin arrays 601 and 602. The housing 2402, 2502 can also be connected to a vehicle's data communication bus, which can carry data to and from the external devices.

Referring back to Figure 3D, a headrest 308 may include an opening 309 for receiving a data media to be inserted in the media source (e.g., media source 2450 or 2550).

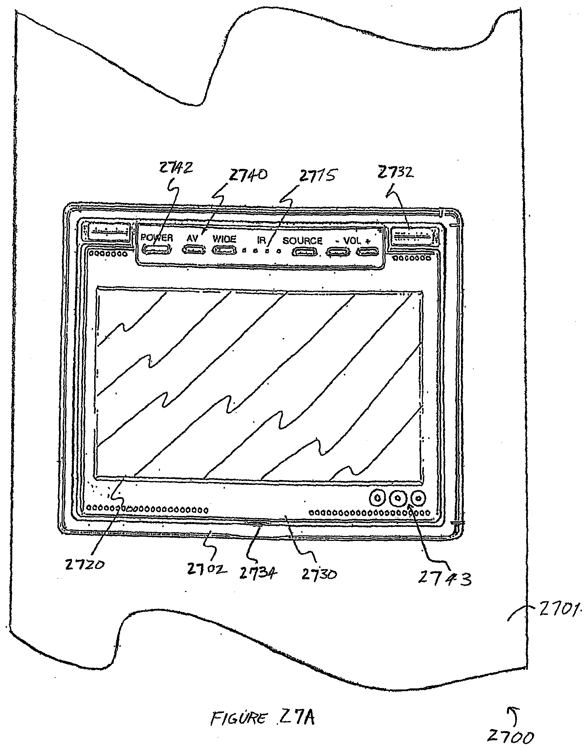

Referring to Figures 27A-27D, an entertainment system 2700 is installed in a vehicle seat 2701, wherein a housing 2702 for a media source 2750 is integrated into the vehicle seat 2701, at, for example, the headrest or the main body of the vehicle seat 2701. A display 2720 is also attached to the housing 2702. Like the housings 2402 and 2502 and media sources 2450 and 2550, the housing 2702 is attached to the seat 2701 and the media source 2750 is mounted in the housing 2702 in the same or similar manner as examples shown in Figures 24 and 25. The media source 2750 may also include any of the devices listed above in connection with the media sources 2450 and 2550. Further, the housing 2702 may include the pin array 601 for mating with a pin array 602 on the media source 2750 for transfer of power and/or data.

As shown in Figures 27A-27D, a door 2730 is connected via a hinge or hinges 2732 to the housing 2702. The door 2730 includes the display 2720 formed on a front side thereof. The display 2720 can be fixed to the door 2730 by, for example, screws, catches, adhesives, molding, pressure fitting, snugly fitting into an open center section of the door 2730 bordered by a frame and/or any other means known to those skilled in the art.

The hinge 2732, located at a top portion of the door 2730, allows the door 2730 to pivot away from the housing 2702 to expose a cavity 2710 for receiving and supporting the media source 2750 in the housing 2702. The hinge 2732 may be positioned at top, bottom or side portions of the door 2730 as long the door 2730 can be opened to expose the cavity 2710 for receiving the media source 2750.

The media source 2750 includes a cover 2752 that can be opened to allow insertion of a data media, such as a DVD, into the media source 2750. The door 2730 may be opened, for example, by pulling a tab 2734. Alternatively, a button (not shown) may be depressed releasing the door 2730 from the housing 2702. The cover 2752 may be opened, for example, by pulling a tab (not shown) and/or by depressing a button 2754 releasing the cover 2752 from the entertainment unit 2750. The door 2730 may be closed by re-engaging the released side of the door 2730 with the housing 2702. A desired program can be played for viewing while the door 2730 is in the closed position. Controls 2760 for controlling functions of the media source 2750, such as, volume, previous, next, pause, eject, play and power on/off, are shown in Figure 27D positioned on the media source 2750.

The display 2720 has a thin display screen, preferably an LCD type screen. Specifications for the display 2720 may include a TFT color liquid crystal display with a diagonal length of 4-8 inches, and a color TFT active matrix display. The display 2720 may include a control panel 2740 with control buttons 2742 for controlling the on screen display characteristics and input and output ports 2743 for items such as external devices or headphones. The media source 2750 may also include input and output ports positioned thereon.

It is to be appreciated that a display, such as the display 2720, may also be attached to the housings 2402, 2502, either via a door or directly to the housings using fasteners, screws, catches, molding, snap-fit mechanisms or the like. A display may also be handheld, mounted in another portion of the vehicle away from the seat mounted media source, such as to a wall of the vehicle (e.g. the ceiling of the vehicle), on another seat or on a different portion of the same seat as the media source (e.g., on a headrest, while the media source is positioned on the main body of the seat).

The display can be operatively coupled to the media source directly via wires or some other electrical connectors, or through the housing, via, for example, electrical connectors coupled to the pin array 601.

Transfer of data may be obtained through the pin arrays 601, 602. For example, video data from a DVR media source may be transferred through the pin arrays 601, 602 to a display coupled to the housing for producing a video image on a display screen. Similarly, audio data may be transferred through the pin arrays 601, 602 to a display, speakers and/or headphones coupled to the housing for producing sound associated with a video image. Further, audio data may be sent through the display to speakers or headphones via wired or wireless transmission. Video and audio data may also be transferred to displays, speakers and/or headphones directly from the media source. Audio and/or video data from any of the above described media sources can be transferred via the pin arrays 601, 602 or through some other physical connection, such as wires or through wireless transmission to displays, speakers and/or headphones.

To provide for audio reception through wireless headphones, the display 2720 or the media source 2750 may include a wireless transmitter 2775 for transmitting wireless signals to wireless receivers in wireless headphones via, for example radio frequency (RF) or infrared (IR) signals, using an antenna or optical transmitting device, respectively. The wireless transmitter 2775 can be capable of transmitting wireless signals over more than one channel operating at a different frequency for each channel so that interference between more than one wireless headphone user watching different programs can be avoided. Audio may also be provided to vehicle occupants through the existing vehicle audio system or through a speaker mounted in the seat 2701 or media source 2750.

Like the cover 2300 referred to in Figure 23, when the entertainment systems 2400, 2500 and 2700 are not in use, a cover can conceal the housing and cavity. The cover is manufactured from a material such as, plastic, wood, leather, vinyl, cloth, and/or aluminum. Depending on the cover material, the cover can be secured by the same mechanisms shown in Figures 7A-7B, or with catches, snaps, Velcro, and/or a zipper. The cover and the media source can have one or more features in common, such as openings for receiving latches and the like.

It is to be appreciated that a media source 2450, 2550 and/or 2750 is easily removable from and can be operated outside of a vehicle, for example, in home or office environments.

Specifications for the displays may include a TFT color liquid crystal display with a diagonal length of 4-8 inches, and a color TFT active matrix display. The dimensions of the video systems to be installed in the headrests, including the base portion, may be approximately 150-250mm wide, 125-175mm long and 30-60mm thick.

## Claims

1. An entertainment system, comprising:
a media source (1601);
a housing (1609) for supporting the media source (1601), wherein the housing (1609) is coupled to an inner portion of a seat (102) of a vehicle, and the media source (1601) is capable of being selectively connected to and disconnected from the housing (1609); and
a door (1602) pivotally attached to the housing (1609) with a first hinge (1603), wherein when the door (1602) is open it reveals a display (1604) of the media source (1601) and when the door (1602) is closed it conceals the display (1604) of the media source (1601),
wherein the display (1604) is coupled to a base portion (1605) of the media source (1601) via an arm (1607) and the arm (1607) is coupled to the display (1604) via a second hinge (1608) and the arm (1607) is coupled to the base portion (1605) via a third hinge (1606).

2. The entertainment system of claim 1, wherein the media source (1601) includes at least one of a DVD player, a CD-ROM player, a video game player, a videocassette player, a television tuner, a radio tuner, an MP3 player, and a digital video recorder.

3. The entertainment system of claim 1, wherein the housing (1609) is mounted in one of a headrest and a main body of the seat (102).

4. The entertainment system of claim 1, wherein the housing (1609) includes a cavity for receiving the media source (1601).

5. The entertainment system of claim 1, wherein the media source (1601) includes a wireless transmitter for transmitting wireless signals.

6. The entertainment system of claim 5, wherein the wireless signals include at least one of audio signals and video signals.

7. The entertainment system of claim 1, wherein the media source (1601) includes a port (1362, 1363) for connecting to an external device.

8. The entertainment system of claim 1, further comprising another display operatively coupled to the media source (1601), wherein the another display is mounted at a location in the vehicle away from the housing (1609).

9. The entertainment system of claim 8, wherein the another display is operatively coupled to the media source (1601) via at least one of a direct connection, a connection through the housing (1609) and a wireless connection.

10. The entertainment system of claim 1, wherein the media source (1601) is electrically coupled to the housing (1609).

11. The entertainment system of claim 10, wherein the media source (1601) is electrically coupled to the housing (1609) using a pin array.

12. The entertainment system of claim 1, wherein the hinge (1603) is positioned at a top, bottom or side portion of the door (1602).

13. The entertainment system of claim 1, wherein the seat (102) of the vehicle includes an opening in line with a slot (1364, 1365) in the media source (1601) for receiving a data media to be inserted in the slot (1364, 1365) .

14. The entertainment system of claim 1, wherein the media source (1601) includes a storage device capable of storing at least one of a plurality of audio files and a plurality of video files.

15. A docking station (1303) for supporting a removable video system (1201), the docking station (1303) comprising:
a connector (601, 602) for electrically coupling the docking station (1303) to the removable video system (1201);
at least one port (1362, 1363) for connecting a media source (1601) to the docking station (1303), wherein data from the media source (1601) is provided to the docking station (1303) via the at least one port (1362, 1363) and to the removable video system (1201) via the connector (601, 602); and
at least one slot (1364, 1365) for receiving a media storage medium, wherein data from the media storage medium is provided to the removable video system (1201) via the connector (601,602),
wherein the removable video system (1201) includes a display (1604) capable of displaying video data received from the docking station (1303), and
wherein the display (1604) is coupled to a base portion (1605) of the media source (1601) via an arm (1607) and the arm (1607) is coupled to the display (1604) via a second hinge (1608) and the arm (1607) is coupled to the base portion (1605) via a third hinge (1606).

16. The docking station (1303) as recited in claim 15, wherein the at least one port (1362, 1363) is one of a universal serial bus port, an audio input port, a video input port and an audio/video input port.

17. The docking station (1303) as recited in claim 15, wherein the data includes at least one of audio data and video data.

18. The docking station (1303) as recited in claim 15, wherein the media source (1601) is one of an MPEG player, a card reader, a DVD player, a CD-ROM player, a video game player, a videocassette player, and a digital video recorder.

19. The docking station (1303) as recited in claim 15, wherein the docking station (1303) receives a media storage medium and data from the media storage medium is provided to the removable video system (1201) via the connector (601, 602).

20. The docking station (1303) as recited in claim 15, further comprising a television tuner, wherein a program received by the television tuner is provided to the removable video system (1201) via the connector (601, 602).

21. The docking station (1303) as recited in claim 15, wherein the docking station (1303) is mounted in an interior portion of a vehicle.

22. The docking station (1303) as recited in claim 15, wherein the docking station (1303) is mounted to one of a ceiling, a wall and a piece of furniture.

23. The docking station (1303) as recited in claim 15, wherein the docking station (1303) is free standing.

24. The docking station (1303) as recited in claim 15, further comprising a stationary portion and a swinging portion attached to the stationary portion, wherein the removable video system (1201) is secured to the swinging portion.

25. The docking station (1303) as recited in claim 15, wherein the docking station (1303) is connectable to a battery.

26. The docking station (1303) as recited in claim 15, wherein the docking station (1303) includes a port (1362, 1363) for connecting to an adapter for a power supply.

27. The docking station (1303) as recited in claim 15, wherein the removable video system (1201) includes a media player.

28. The docking station (1303) as recited in claim 27, wherein the media player is capable of playing media stored on at least one of a digital video disc, a compact disc, a video compact disc, a flash card, a secure digital card, a smart media card and a memory stick card.

29. The docking station (1303) as recited in claim 15, wherein the removable video system (1201) is capable of operating when remote from the docking station (1303).

30. The docking station (1303) as recited in claim 15, wherein the removable video system (1201) is capable of connecting to at least one of a battery and an adapter for a power supply.

## Patentansprüche

1. Unterhaltungssystem, umfassend:
eine Medienquelle (1601);
ein Gehäuse (1609) zum Stützen der Medienquelle (1601),
wobei das Gehäuse (1609) mit einem inneren Abschnitt eines Sitzes (102) eines Fahrzeugs gekoppelt ist und die Medienquelle (1601) wahlweise mit dem Gehäuse (1609) verbunden und von diesem getrennt werden kann; und
eine Tür (1602), die an dem Gehäuse (1609) mit einem ersten Scharnier (1603) angelenkt ist, wobei, wenn die Tür (1602) offen ist, ein Display (1604) der Medienquelle (1601) frei gelegt wird, und wenn die Tür (1602) geschlossen ist, das Display (1604) der Medienquelle (1601) verborgen wird, wobei das Display (1604) mit einem Basisabschnitt (1605) der Medienquelle (1601) über einen Arm (1607) gekoppelt ist und der Arm (1607) mit dem Display (1604) über ein zweites Scharnier (1608) gekoppelt ist und der Arm (1607) mit dem Basisabschnitt (1605) über ein drittes Scharnier (1606) gekoppelt ist.

2. Unterhaltungssystem nach Anspruch 1, wobei die Medienquelle (1601) mindestens eines von einem DVD-Player, einem CD-ROM-Player, einem Videospiele-Player, einem Videokassetten-Player, einem Fernsehtuner, einem Radiotuner, einem MP3-Player und einem digitalen Videorecorder umfasst.

3. Unterhaltungssystem nach Anspruch 1, wobei das Gehäuse (1609) in einer Kopfstütze oder in einem Hauptkorpus des Sitzes (102) montiert ist.

4. Unterhaltungssystem nach Anspruch 1, wobei das Gehäuse (1609) einen Hohlraum zum Aufnehmen der Medienquelle (1601) umfasst.

5. Unterhaltungssystem nach Anspruch 1, wobei die Medienquelle (1601) einen Drahtlossender zum Senden von Drahtlossignalen umfasst.

6. Unterhaltungssystem nach Anspruch 5, wobei die Drahtlossignale Audiosignale und/oder Videosignale enthalten.

7. Unterhaltungssystem nach Anspruch 1, wobei die Medienquelle (1601) einen Port (1362, 1363) zum Verbinden mit einem externen Gerät umfasst.

8. Unterhaltungssystem nach Anspruch 1, des Weiteren umfassend ein weiteres Display, das mit der Medienquelle (1601) wirkverbunden ist, wobei das weitere Display an einer Stelle in dem Fahrzeug montiert ist, die von dem Gehäuse (1609) entfernt liegt.

9. Unterhaltungssystem nach Anspruch 8, wobei das weitere Display mit der Medienquelle (1601) über mindestens eines von einer Direktverbindung, einer Verbindung durch das Gehäuse (1609) und einer drahtlosen Verbindung wirkverbunden ist.

10. Unterhaltungssystem nach Anspruch 1, wobei die Medienquelle (1601) elektrisch mit dem Gehäuse (1609) gekoppelt ist.

11. Unterhaltungssystem nach Anspruch 10, wobei die Medienquelle (1601) elektrisch mit dem Gehäuse (1609) unter Verwendung einer Pin-Anordnung gekoppelt ist.

12. Unterhaltungssystem nach Anspruch 1, wobei das Scharnier (1603) an einem oberen, unteren oder seitlichen Abschnitt der Tür (1602) positioniert ist.

13. Unterhaltungssystem nach Anspruch 1, wobei der Sitz (102) des Fahrzeugs eine Öffnung aufweist, die auf einer Achse mit einem Schlitz (1364, 1365) in der Medienquelle (1601) liegt, um ein Datenmedium aufzunehmen, das in den Schlitz (1364, 1365) einzuschieben ist.

14. Unterhaltungssystem nach Anspruch 1, wobei die Medienquelle (1601) eine Speichervorrichtung umfasst, die in der Lage ist, mehrere Audiodateien und mehrere Videodateien zu speichern.

15. Docking-Station (1303) zum Stützen eines entfernbaren Videosystems (1201), wobei die Docking-Station (1303) Folgendes umfasst:
einen Verbinder (601, 602) zum elektrischen Koppeln der Docking-Station (1303) mit dem entfernbaren Videosystem (1201);
mindestens einen Port (1362, 1363) zum Verbinden einer Medienquelle (1601) mit der Docking-Station (1303), wobei Daten von der Medienquelle (1601) an die Docking-Station (1303) über den mindestens einen Port (1362, 1363) und an das entfernbare Videosystem (1201) über den Verbinder (601, 602) übermittelt werden; und
mindestens einen Schlitz (1364, 1365) zum Aufnehmen eines Medienspeichermediums, wobei Daten von dem Medienspeichermedium an das entfernbare Videosystem (1201) über den Verbinder (601, 602) übermittelt werden,
wobei das entfernbare Videosystem (1201) ein Display (1604) umfasst, das in der Lage ist, Videodaten anzuzeigen, die von der Docking-Station (1303) empfangen werden, und
wobei das Display (1604) mit einem Basisabschnitt (1605) der Medienquelle (1601) über einen Arm (1607) gekoppelt ist und der Arm (1607) mit dem Display (1604) über ein zweites Scharnier (1608) gekoppelt ist und der Arm (1607) mit dem Basisabschnitt (1605) über ein drittes Scharnier (1606) gekoppelt ist.

16. Docking-Station (1303) nach Anspruch 15, wobei der mindestens eine Port (1362, 1363) ein Universal Serial Bus-Port, ein Audioeingangsport, ein Videoeingangsport oder ein Audio-/Videoeingangsport ist.

17. Docking-Station (1303) nach Anspruch 15, wobei die Daten Audiodaten und/oder Videodaten enthalten.

18. Docking-Station (1303) nach Anspruch 15, wobei die Medienquelle (1601) eines von einem MPEG-Player, einem Kartenlesegerät, einem DVD-Player, einem CD-ROM-Player, einem Videospiele-Player, einem Videokassetten-Player und einem digitalen Videorecorder ist.

19. Docking-Station (1303) nach Anspruch 15, wobei die Docking-Station (1303) ein Medienspeichermedium aufnimmt und Daten von dem Medienspeichermedium an das entfernbare Videosystem (1201) über den Verbinder (601, 602) übermittelt werden.

20. Docking-Station (1303) nach Anspruch 15, des Weiteren umfassend einen Fernsehtuner, wobei ein durch den Fernsehtuner empfangenes Programm an das entfernbare Videosystem (1201) über den Verbinder (601, 602) übermittelt wird.

21. Docking-Station (1303) nach Anspruch 15, wobei die Docking-Station (1303) in einem inneren Abschnitt eines Fahrzeugs montiert ist.

22. Docking-Station (1303) nach Anspruch 15, wobei die Docking-Station (1303) an einer Decke, einer Wand oder an einem Möbelstück montiert ist.

23. Docking-Station (1303) nach Anspruch 15, wobei die Docking-Station (1303) frei steht.

24. Docking-Station (1303) nach Anspruch 15, die des Weiteren einen ortsfesten Abschnitt und einen Schwenkabschnitt, der an dem ortsfesten Abschnitt angebracht ist, umfasst, wobei das entfernbare Videosystem (1201) an dem Schwenkabschnitt befestigt ist.

25. Docking-Station (1303) nach Anspruch 15, wobei die Docking-Station (1303) mit einer Batterie verbunden werden kann.

26. Docking-Station (1303) nach Anspruch 15, wobei die Docking-Station (1303) einen Port (1362, 1363) zum Verbinden mit einem Adapter für eine Stromversorgung umfasst.

27. Docking-Station (1303) nach Anspruch 15, wobei das entfernbare Videosystem (1201) einen Media-Player umfasst.

28. Docking-Station (1303) nach Anspruch 27, wobei der Media-Player in der Lage ist, Medien abzuspielen, die auf mindestens einem von Folgendem gespeichert sind: einer digitalen Video-Disk, einer Compact-Disk, einer Video-Compact-Disk, einer Flash-Karte, einer sicheren digitalen Karte, einen intelligenten Medien-Karte und einer Speicherstick-Karte.

29. Docking-Station (1303) nach Anspruch 15, wobei das entfernbare Videosystem (1201) in der Lage ist zu arbeiten, wenn es sich von der Docking-Station (1303) entfernt befindet.

30. Docking-Station (1303) nach Anspruch 15, wobei das entfernbare Videosystem (1201) in der Lage ist, mit einer Batterie und/oder einem Adapter für eine Stromversorgung verbunden zu werden.

## Revendications

1. Système de divertissement, comprenant :
une source de contenu multimédia (1601) ;
un boîtier (1609) destiné à supporter la source de contenu multimédia (1601), dans lequel le boîtier (1609) est accouplé à une partie intérieure de siège (102) d'un véhicule, et la source de contenu multimédia (1601) est apte à être reliée au boîtier (1609) et à en être séparée de façon sélective ; et
une porte (1602) fixée au boîtier (1609), de manière à pouvoir pivoter, au moyen d'une première
charnière (1603), dans lequel lorsque la porte (1602) est ouverte, elle laisse apparaître un dispositif d'affichage (1604) de la source de contenu multimédia (1601) et lorsque la porte (1602) est fermée, elle dissimule le dispositif d'affichage (1604) de la source de contenu multimédia (1601),
dans lequel le dispositif d'affichage (1604) est accouplé à une partie base (1605) de la source de contenu multimédia (1601) par l'intermédiaire d'un bras (1607) et le bras (1607) est accouplé au dispositif d'affichage (1604) par l'intermédiaire d'une deuxième charnière (1608) et le bras (1607) est accouplé à la partie base (1605) par l'intermédiaire d'une troisième charnière (1606).

2. Système de divertissement selon la revendication 1, dans lequel la source de contenu multimédia (1601) inclut au moins un élément parmi un lecteur de DVD, un lecteur de CD-ROM, un lecteur de jeux vidéo, un lecteur de vidéocassettes, un syntoniseur de télévision, un syntoniseur de radio, un lecteur MP3 et un enregistreur vidéo numérique.

3. Système de divertissement selon la revendication 1, dans lequel le boîtier (1609) est monté soit dans un appuie-tête soit dans un corps principal de siège (102).

4. Système de divertissement selon la revendication 1, dans lequel le boîtier (1609) présente une cavité destinée à recevoir la source de contenu multimédia (1601).

5. Système de divertissement selon la revendication 1, dans lequel la source de contenu multimédia (1601) comporte un émetteur radioélectrique destiné à émettre des signaux radioélectriques.

6. Système de divertissement selon la revendication 5, dans lequel les signaux radioélectriques incluent des signaux audio et/ou des signaux vidéo.

7. Système de divertissement selon la revendication 1, dans lequel la source de contenu multimédia (1601) comporte un port (1362, 1363) destiné à la connexion à un dispositif externe.

8. Système de divertissement selon la revendication 1, comprenant en outre un autre dispositif d'affichage couplé fonctionnellement à la source de contenu multimédia (1601), dans lequel l'autre dispositif d'affichage est monté à un emplacement du véhicule à distance du boîtier (1609) .

9. Système de divertissement selon la revendication 8, dans lequel l'autre dispositif d'affichage est couplé fonctionnellement à la source de contenu multimédia (1601) au moyen d'une connexion directe et/ou d'une connexion par l'intermédiaire du boîtier (1609) et/ou d'une connexion sans fil.

10. Système de divertissement selon la revendication 1, dans lequel la source de contenu multimédia (1601) est couplée électriquement au boîtier (1609).

11. Système de divertissement selon la revendication 10, dans lequel la source de contenu multimédia (1601) est couplée électriquement au boîtier (1609) à l'aide d'un ensemble de broches.

12. Système de divertissement selon la revendication 1, dans lequel la charnière (1603) est positionnée à une partie supérieure, inférieure ou latérale de la porte (1602).

13. Système de divertissement selon la revendication 1, dans lequel le siège (102) du véhicule présente une ouverture dans l'alignement d'un logement (1364, 1365) de la source de contenu multimédia (1601) pour recevoir un support de données à insérer dans le logement (1364, 1365).

14. Système de divertissement selon la revendication 1, dans lequel la source de contenu multimédia (1601) comporte un dispositif de stockage apte à stocker une pluralité de fichiers audio et/ou une pluralité de fichiers vidéo.

15. Station d'accueil (1303) destinée à supporter un système vidéo amovible (1201), la station d'accueil (1303) comprenait :
un connecteur (601, 602) destiné à coupler électriquement la station d'accueil (1303) au système vidéo amovible (1201) ; ;
au moins un port (1362, 1363) destiné à connecter une source de contenu multimédia (1601) à la station d'accueil (1303), dans laquelle des données provenant de la source de contenu multimédia (1601) sont fournies à la station d'accueil (1303) par l'intermédiaire du ou des port(s) (1362, 1363), et au système vidéo amovible (1201) par l'intermédiaire du connecteur (601, 602) ; et
au moins un logement (1364, 1365) destiné à recevoir un support de stockage de contenu multimédia, dans laquelle des données provenant du support de stockage de contenu multimédia sont fournies au système vidéo amovible (1201) par l'intermédiaire du connecteur (601, 602),
dans laquelle le système vidéo amovible (1201) inclut un dispositif d'affichage (1604) apte à afficher des données vidéo reçues en provenance de la station d' accueil (1303), et
dans laquelle le dispositif d'affichage (1604) est accouplé à une partie base (1605) de la source de contenu multimédia (1601) par l'intermédiaire d'un bras (1607) et le bras (1607) est accouplé au dispositif d'affichage (1604) par l'intermédiaire d'une deuxième charnière (1608) et le bras (1607) est accouplé à la partie base (1605) par l'intermédiaire d'une troisième charnière (1606).

16. Station d'accueil (1303) selon la revendication 15, dans laquelle le(s) port(s) (1362, 1363) est ou sont un port parmi un port de bus série universel, un port d'entrée audio, un port d'entrée vidéo et un port d'entrée audio/vidéo.

17. Station d'accueil (1303) selon la revendication 15, dans laquelle les données incluent des données audio et/ou des données vidéo.

18. Station d'accueil (1303) selon la revendication 15, dans laquelle la source de contenu multimédia (1601) est un élément parmi un lecteur MPEG, un lecteur de cartes, un lecteur de DVD, un lecteur de CD-ROM, un lecteur de jeux vidéo, un lecteur de vidéocassettes, et un enregistreur vidéo numérique.

19. Station d'accueil (1303) selon la revendication 15, dans laquelle la station d'accueil (1303) reçoit un support de stockage de contenu multimédia et des données provenant du support de stockage de contenu multimédia sont fournies au système vidéo amovible (1201) par l'intermédiaire du connecteur (601, 602).

20. Station d'accueil (1303) selon la revendication 15, comprenant en outre un syntoniseur de télévision, dans laquelle une émission reçue par le syntoniseur de télévision est fournie au système vidéo amovible (1201) par l'intermédiaire du connecteur (601, 602).

21. Station d'accueil (1303) selon la revendication 15, dans laquelle la station d'accueil (1303) est montée dans une partie intérieure de véhicule.

22. Station d'accueil (1303) selon la revendication 15, dans laquelle la station d'accueil (1303) est montée sur un plafond ou sur une paroi ou encore sur un élément de mobilier.

23. Station d'accueil (1303) selon la revendication 15, dans laquelle la station d'accueil (1303) est autoportante.

24. Station d'accueil (1303) selon la revendication 15, comprenant en outre une partie fixe et une partie oscillante attachée à la partie fixe, dans laquelle le système vidéo amovible (1201) est fixé à la partie oscillante.

25. Station d'accueil (1303) selon la revendication 15, dans laquelle la station d'accueil (1303) peut être connectée à une batterie.

26. Station d'accueil (1303) selon la revendication 15, dans laquelle la station d'accueil (1303) comporte un port (1362, 1363) destiné à la connexion à un adaptateur d'alimentation électrique.

27. Station d'accueil (1303) selon la revendication 15, dans laquelle le système vidéo amovible (1201) inclut un lecteur multimédia.

28. Station d'accueil (1303) selon la revendication 27, dans laquelle le lecteur multimédia peut lire un contenu multimédia stocké sur au moins un élément parmi un disque vidéo numérique, un disque compact, un disque compact vidéo, une carte de mémoire flash, une carte Secure Digital, une carte Smart Media et une carte Memory Stick.

29. Station d'accueil (1303) selon la revendication 15, dans laquelle le système vidéo amovible (1201) peut fonctionner lorsqu'il est à distance de la station d'accueil (1303).

30. Station d'accueil (1303) selon la revendication 15, dans laquelle le système vidéo amovible (1201) peut être connecté à une batterie et/ou à un adaptateur d'alimentation électrique.
